# EUROPÄISCHE PATENTSCHRIFT

(11) **EP 2 019 278 B1**
(45) Veröffentlichungstag und Bekanntmachung des Hinweises auf die Patenterteilung: **08.07.2015**
(21) Anmeldenummer: 08011968.8
(22) Anmeldetag: 03.07.2008
(51) Int. Cl.: F26B 5/06, F26B 25/00

(54) **Vorrichtung zum Be- und Entladen einer Stellplatte einer Gefriertrocknungsanlage**
Apparatus for loading and unloading an adjustable plate of a freeze-drying plant
Dispositif de charge et de décharge d'une plaque réglable d'une installation de lyophilisation

(30) Priorität: 21.07.2007 DE 102007034084
(43) Veröffentlichungstag der Anmeldung: 28.01.2009
(60) Teilanmeldung: 14002174.2
(73) Patentinhaber: HOF Sonderanlagenbau GmbH, 35102 Lohra (DE)
(72) Erfinder: Wagner, Alexander, 35102 Lohra (DE); Battenberg, Ralf, 35102 Fronhausen (DE)
(74) Vertreter: Walther, Walther & Hinz GbR

(56) Entgegenhaltungen:
- WO-A1-2005/121672
- US-A- 5 343 999

## Beschreibung

Die vorliegende Erfindung betrifft eine Vorrichtung zum Be- und Entladen einer Stellplatte einer Gefriertrocknungsanlage gemäß dem Oberbegriff des Anspruches 1.

Das in einer Gefriertrocknungsanlage zu trocknende Gut wird in kleinen Fläschchen, sogenannten Vials, abgefüllt und mit Hilfe dieser Vials transportiert. Auf diesen Vials sind Deckel vorgesehen, die nach Beendigung des Gefriertrocknungsverfahrens geschlossen werden.

Die mit dem Gefriertrocknungsgut befüllten und mit einem noch offenen Deckel versehenen Vials werden dabei auf einen Übergabetisch gebracht und von dort mit einer Schiebevorrichtung auf eine Stellplatte in das Innere der Gefriertrocknungsanlage transportiert. In der Gefriertrocknungsanlage ist eine Vielzahl von Stellplatten vorgesehen, wobei beim Beladen der Gefriertrocknungsanlage die Stellplatten von einem Stapel genommen werden, auf die Höhe des Übergabetisches versetzt werden und mit den Vials beladen werden. Nachdem die Stellplatte befüllt ist, wird diese zusammen mit den bereits zuvor befüllten Stellplatten nach oben bewegt und es wird die nächste Stellplatte vom Stapel geholt und auf Höhe des Übergabetisches gebracht usw.. Nach Beendigung des Gefriertrocknungsvorgangs werden die Stellplatten derart zusammengeführt, dass die oberhalb der Vials befindliche Stellplatte auf den Deckeln der Vials zur Anlage kommt und diese Deckel in die Vials hineindrückt, so däss die Vials fortan verschlossen sind. Anschließend werden die Stellplatten wieder so weit auseinandergezogen, dass die auf Höhe der Übergabeplatte befindliche Stellplatte entladen werden kann. Sobald diese Stellplatte entladen ist, wird diese auf den Boden der Gefriertrocknungsanlage gebracht und dort gestapelt, während die nächste Stellplatte auf Höhe des Übergabetisches gefahren wird, um diese zu entladen, usw..

Aus der WO 2005/121672 A1 ist eine Gefriertrocknungsanlag nach dem Oberbegriff des Anspruchs 1 bekannt, die eine rechteckige Öffnung zur Einführung von Vials besitzt. Durch diese Öffnung können die Vials mittels einer Schiebevorrichtung auf entsprechende Stellplatten innerhalb der Gefriertrocknungsanlage geschoben werden. Innerhalb der Kammer der Gefriertrocknungsanlage ist ein Entladeschieber vorgesehen, der zu gegebener Zeit die Vials wieder von der Stellplatte durch die Öffnung hindurch nach außerhalb der Gefriertrocknungsanlage auf einen Übergabetisch verschiebt.

Aus der EP 1 619 459 A1 ist eine Vorrichtung zum Be- und Entladen einer Stellplatte einer Gefriertrocknungsanlage bekannt, dessen Schiebevorrichtung einen hoch und runter schwenkbaren Balken umfasst, der auf einem rechts und links am Übergabetisch und an der Stellplatte geführten Schlitten gehalten ist. Die Schlitten sind auf speziellen Schienen geführt, welche am rechten und linken Rand der Übergabeplatte und der Stellplatte angebracht sind. Dabei sind die Schienen als rechtwinklig nach oben abstehender Steg ausgeführt und bilden gleichzeitig eine Seitenbegrenzung für die auf dem Übergabetisch bzw. der Stellplatte befindlichen Vials.

Zum Beladen der Stellplatte mit einer Anzahl von Vials werden diese zunächst auf dem Übergabetisch platziert. Sobald genügend Vials vorhanden sind, wird der an den Schlitten gehaltene Balken an die vordersten Vials herangeführt, wobei an den rechten und den linken Schlitten je ein flexibles Metallband angreift, welches über einen Antrieb betätigt wird. Anschließend wird der Balken weiter in Richtung der Stellplatte bewegt und schiebt somit die Vials vor sich her. Die als Seitenbegrenzung wirkenden Schienen, gewährleisten dabei, dass keine Vials vom Übergabetisch oder der Stellplatte herunterfallen. Sobald die vordersten Vials auf der Stellplatte abgesetzt sind, ziehen die Metallbänder die Schlitten und damit den Balken wieder zurück in die Ausgangsposition, bevor der Balken über einen am Schlitten angebrachten Schwenkmechanismus nach oben weggeschwenkt wird, so dass die nächsten Vials unter dem Balken hindurch auf dem Übergabetisch abgestellt werden können. Gleichzeitig wird in der Gefriertrocknungsanlage die nun befüllte Stellplatte nach oben gefahren und die nächste, leere Stellplatte wird bereitgestellt. Sind auf dem Übergabetisch genügend Vials vorhanden, wiederholt sich dieser Vorgang und die Schiebevorrichtung schiebt die nächste Gruppe von Vials auf die nächste Stellplatte.

Zum Entladen wird der Balken über den Schwenkmechanismus wieder nach oben gefahren und zusammen mit dem Schlitten über die flexiblen Bänder entlang der Schiene bis an den hinteren Rand der Stellplatte gebracht, wo der Balken wieder abgesenkt wird. Anschließend werden die Bänder wieder angezogen und ziehen somit den Schlitten und den Balken zusammen mit den Vials von der Stellplatte auf den Übergabetisch, von wo die Vials dann weiter abtransportiert werden.
Beim Einschieben der Vials vom Übergabetisch auf die Stellplatte kann es vorkommen, dass die ursprünglich korrekt in einzelnen Reihen aufgestellten Vials durcheinander geraten, wobei auch einige Vials bis an die die Seiten begrenzende Schiene herangeführt werden. Wird die Anzahl der Vials nun weiter auf die Stellplatte verschoben, so findet eine Berührung der äußeren Vials mit der Schiene statt, wodurch die Vials aufgrund der anfallenden Reibung weiter durcheinander gebracht werden. Dabei kann es auch passieren, dass einzelne Vials umfallen.

Nach Beendigung des Gefriertrocknungsvorgangs wird die Schiebevorrichtung mittels der auf den Schienen geführten Schlitten bis an den hinteren Rand der Stellplatte gefahren. Dabei kommt es oft vor, dass der Schlitten nahe an der Schiene befindliche Vials ein wenig zur Seite schieben muss, um an das hintere Ende der Stellplatte zu gelangen. Auch hierbei werden die Vials weiter durcheinander gebracht und es können einzelne Vials umfallen.

Analoges gilt beim Entladen, denn nun werden die Vials in der entgegengesetzten Richtung zunächst einmal zusammengeschoben und von der Stellplatte auf den Übergabetisch bewegt. Auch hier findet eine Reibung zwischen den äußeren Vials und der Seiten begrenzenden Schiene statt, so dass die Vials weiter durcheinander gebracht werden, und so dass auch schon mai ein Viai umfallen kann.

Außerdem kommt es vor, dass nach dem Gefriertrocknungsprozess einzelne Vials an der Unterseite der darüber liegenden Stellplatte haften bleiben. Wird nun die Schiebevorrichtung mit dem Balken in die Gefriertrocknungsanlage eingefahren, so stößt der Balken an den an der Unterseite der nächsten Stellfläche anhaftenden Vials an und beim herunterfallen können diese Vials umkippen.

Bei Gefriertrocknungsanlagen werden häufig Lebensmittel oder Medikamente verarbeitet. Folglich gelten hier sehr strenge Hygieneanforderungen. Dies hat zur Folge, dass einmal umgefallene Vials nicht weiter verarbeitet werden dürfen und somit Ausschuss darstellen.

Davon ausgehend liegt der vorliegenden Erfindung die Aufgabe zu Grunde, eine Vorrichtung der eingangs genannten Art zu schaffen, bei der ein ordnungsgemäßes entladen der Stellplatte möglich ist, auch wenn der Abstand benachbarter Stellplatten der Gefriertrocknungs-anlage auf ein Minimum reduziert ist. Eine weitere Aufgabe besteht darin, die Vials sicher auf die Stellplatte zurückzuführen.

Als technische Lösung dieser Aufgabe wird erfindungsgemäß eine Vorrichtung zum Be- und Entladen einer Stellplatte einer Gefriertrocknungsanlage mit den Merkmalen des Anspruches 1. Vorteilhafte Weiterbildungen dieser Vorrichtung und dieser Verfahren sind den jeweiligen Unteransprüchen zu entnehmen.

Eine nach dieser technischen Lehre ausgebildete Vorrichtung zum Be- und Entladen einer Stellplatte einer Gefriertrocknungsanlage hat den Vorteil, dass durch das körperliche Trennen von Beladeschieber und Entladeschieber für jeden Anwendungsfall ein separater Ladeschieber zur Verfügung steht. Hieraus ergibt sich weiterhin, dass der Entladeschieber innerhalb der Gefriertrocknungslagen angeordnet werden kann, während der Beladeschieber außerhalb der Gefriertrocknungsanlage angeordnet ist. Dies hat den Vorteil, dass der Entladeschieber zum Entladen der Vials nicht mühsam and der Vielzahl von Vials vorbeigeführt werden braucht, sondern bereits hinter den Vials zur Verfügung steht. Folglich können beim Einführen der Schiebevorrichtung in die Gefriertrocknungsanlage und hinter die bereits verschlossenen Vials keine an der oberen Stellplatte haftenden Vials mehr umgestoßen werden.

Ein weiterer Vorteil besteht darin, dass der Freiraum zwischen den Vials und der nächsten, darüber liegenden Stellplatte auf einen Minimum reduziert werden kann, da der Entladeschieber nun nicht mehr in diesem Freiraum hindurchgeführt werden braucht. Hierdurch können entweder größere Vials auf der Stellplatte platziert werden oder in der Gefriertrocknungsanlage können zusätzliche Stellplatten vorgesehen werden. In jedem Fall jedoch wird die Kapazität der Gefriertrocknungsanlage damit erhöht.

Dabei hat es sich als-vorteilhaft erwiesen, den Entladeschieber an einer der Öffnungen der Gefriertrocknungsanlage gegenüberliegenden Seite der Kammer anzubringen, da der Entladeschieber hier schon hinter den Vials angeordnet ist und somit nicht mehr an den Vials vorbeigeführt werden braucht.

Den Transportschlitten quer zu seiner Bewegungsrichtung verschiebbar anzubringen, hat den Vorteil, dass der Transportschlitten bei seiner Leerfahrt beabstandet von den Vials bewegt werden kann und somit die Position der Vials nicht unbeabsichtigt verändern wird.

In einer bevorzugten Ausführungsform ist der Entladeschieber an einer Haltemimik gehalten, welche an einer Rückwand der Gefriertrocknungsanlage montiert ist. Diese Haltemimik ist geeignet, den Entladeschieber auf den Transportschlitten, insbesondere die Schubkette oder die Stange, aufzusetzen und den Entladeschieber wieder von dem Transportschlitten abzunehmen. Hierdurch kann die Schiebevorrichtung in einfacher Weise komplettiert werden, ohne dass der Entladeschieber jeweils an den Vials vorbeigeführt werden braucht.

In einer weiteren bevorzugten Weiterbildung weist der Entladeschieber an seinen beiden Enden je ein Langloch auf. Dies hat den Vorteil, dass das Aufsetzen des Entladeschiebers auf den Transportschlitten in einfacher Weise erfol-gen kann und dass der Transportschlitten trotz aufgesetztem Entlade-schieber quer zur Bewegungsrichtung verschoben werden kann.

Analoges gilt für den Beladeschieber.

Zum Beladen der Stellplatte wird der Beladeschieber auf die am rechten und linken Rand des Übergabetisches geführten Transportschlitten mittels der Ablage aufgesetzt, bevor die Transportschlitten zusammen mit dem Beladeschieber und den Vials auf die Stellplatte gefahren werden. Dies hat den Vorteil, dass die Transportschlitten und die Vials mit derselben Geschwindigkeit bewegt werden, so dass zwischen den Transportschlitten und den am Rande befindlichen Vials keine Reibung stattfindet. Hierdurch wird ein versehentliches Umfallen einzelner Vials vermieden.

Zum Entladen der Stellplatte werden der rechte und der linke Transportschlitten ganz in die Gefriertrocknungsanlage hereingefahren, so dass ein Teil des Transportschlittens bis hinter die Vials reicht. Auf diesen Teil des Transportschlittens wird dann der Entladeschieber aufgesetzt, bevor die Transportschlitten zusammen mit dem Entladeschieber und den Vials wieder aus der Gefriertrocknungsanlage herausgezogen werden. Auch hier werden die Transportschlitten mit der gleichen Geschwindigkeit wie die Vials bewegt, so dass keine Reiativgeschwindigkeit und somit keine Reibung zwischen den Vials und dem Transportschlitten auftritt, so dass auch keine Vials umfallen können.

Ein weiterer Vorteil dieses Verfahrens ist, dass der Entladeschieber nicht mühsam zwischen den Vials und der nächst höheren Stellplatte hindurchgeführt werden muss, weil der Entladeschieber ohnehin bereits hinter den Stellplatten vorhanden ist. Somit können größere Vials eingesetzt werden oder der Abstand zwischen den Vials und der nächste höheren Stellplatte kann verringert werden, was in beiden Fällen zu einer höheren Kapazität der Gefriertrocknungsanlage führt.

Auch wird ein Umschmeißen einzelner Vials vermieden, da die an der Unterseite der Stellplatte klebenden Vials nun nicht mehr vom Entladeschieber abgelöst werden, sondern vielmehr beim Herausziehen der ganzen Anzahl von Vials gelöst werden. Weil der Abstand zwischen den Vials und der nächsten Stellplatte geringer ist, können die benachbarten Vials wie eine Art Führung dienen und somit das herunterfallende Vial in seine ursprüngliche Position zurückführen, ohne dass dieses umfällt.

Zur Überprüfung des Gefriertrocknungsvorgangs und zur Qualitätskontrolle ist es wünschenswert, auch nach dem Abtransport der Vials zur weiteren Verarbeitung zu wissen, an welcher Position innerhalb der Gefriertrocknungsanlage ein einzelnes Vial gestanden hat. Mit der vorliegenden Vorrichtung ist es möglich, die Position eines einzelnen Vials nachzuvollziehen, weil weder beim Be- noch beim Entladen der Vials deren Reihenfolge und Ordnung verändert wird. Folglich ist es zur Qualitätskontrolle ausreichend, diejenigen Vials zu überprüfen, die an kritischen Stellen auf der Stellplatte gestanden haben, um einen Rückschluss auf die Qualität des gesamten Gefriertrocknungsverfahrens ziehen zu können. Dies reduziert den Kontrollaufwand. Auch kann bei Überprüfung einer Vielzahl von Vials herausgefunden werden, ob der Gefriertrocknungsvorgang an sich verbesserungsfähig ist.

Weitere Vorteile der erfindungsgemäßen Vorrichtung zum Be- und Entladen einer Stellplatte einer Gefriertrocknungsanlage ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1a: in schematischer Darstellung eine geschnitten dargestellte Seitenansicht einer ersten Ausführungsform einer erfindungsgemäßen Vorrichtung und einer Gefriertrocknungsanlage, zu einem ersten Zeitpunkt, geschnitten entlang Linie Ia - Ia in Fig. 1b;
- Fig. 1b: eine geschnitten dargestellte Draufsicht auf die Vorrichtung und die Gefriertrocknungsanlage gemäß Fig. 1a, geschnitten entlang Linie Ib - Ib in Fig. 1a;
- Fig. 1c: eine geschnitten dargestellte Frontansicht auf die Vorrichtung und die Gefriertrocknungsanlage gemäß Fig. 1a, geschnitten entlang Linie Ic - Ic in Fig. 1a;
- Fig. 1d: eine Detailvergrößerung der erfindungsgemäßen Vorrichtung gemäß Linie Id in Fig. 1c;
- Fig. 1e: eine Detailvergrößerung der erfindungsgemäßen Vorrichtung gemäß Linie Ie in Fig. 1b;
- Fig. 1f: eine geschnitten dargestellte Seitenansicht der Detailvergrößerung gemäß Fig. 1e, geschnitten entlang Linie If - If in Fig. 1e;
- Fig. 2a: eine geschnitten dargestellte Seitenansicht der Vorrichtung und der Gefriertrocknungsanlage gemäß Fig. 1a, zu einem zweiten Zeitpunkt, geschnitten entlang Linie IIa - IIa in Fig. 2b;
- Fig. 2b: eine geschnitten dargestellte Draufsicht auf die Vorrichtung und die Gefriertrocknungsanlage gemäß Fig. 2a, geschnitten entlang Linie IIb - IIb in Fig. 2a;
- Fig. 2c: eine Detailvergrößerung der erfindungsgemäßen Vorrichtung gemäß Linie IIc in Fig. 2b;
- Fig. 3a: eine geschnitten dargestellte Draufsicht der Vorrichtung und der Gefriertrocknungsanlage gemäß Fig. 1a, zu einem dritten Zeitpunkt;
- Fig. 3b: eine Detailvergrößerung der erfindungsgemäßen Vorrichtung gemäß Linie IIIb in Fig. 3a;
- Fig. 4: eine geschnitten dargestellte Draufsicht der Vorrichtung und der Gefriertrocknungsanlage gemäß Fig. 1a, zu einem vierten Zeitpunkt;
- Fig. 5: eine geschnitten dargestellte Seitenansicht der Vorrichtung und der Gefriertrocknungsanlage gemäß Fig. 1a, zu einem fünften Zeitpunkt;
- Fig. 6: eine geschnitten dargestellte Seitenansicht der Vorrichtung und der Gefriertrocknungsanlage gemäß Fig. 1a, zu einem sechsten Zeitpunkt;
- Fig. 7: eine geschnitten dargestellte Draufsicht der Vorrichtung und der Gefriertrocknungsanlage gemäß Fig. 1a, zu einem siebten Zeitpunkt;
- Fig. 8a: eine geschnitten dargestellte Draufsicht der Vorrichtung und der Gefriertrocknungsanlage gemäß Fig. 1a, zu einem achten Zeitpunkt;
- Fig. 8b: eine Detailvergrößerung der erfindungsgemäßen Vorrichtung gemäß Linie VIIIb in Fig. 8a;
- Fig. 9: eine geschnitten dargestellte Seitenansicht der Vorrichtung und der Gefriertrocknungsanlage gemäß Fig. 1a, zu einem neunten Zeitpunkt;
- Fig. 10: eine geschnitten dargestellte Draufsicht der Vorrichtung und der Gefriertrocknungsanlage gemäß Fig. 1a, zu einem zehnten Zeitpunkt;
- Fig. 11: eine geschnitten dargestellte Draufsicht der Vorrichtung und der Gefriertrocknungsanlage gemäß Fig. 1a, zu einem elften Zeitpunkt;
- Fig. 12a: in schematischer Darstellung eine geschnitten dargestellte Seitenansicht einer zweiten Ausführungsform einer erfindungsgemäßen Vorrichtung und einer Gefriertrocknungsanlage, zu einem ersten Zeitpunkt;
- Fig. 12b: die Vorrichtung gemäß Fig. 12a zu einem zweiten Zeitpunkt;
- Fig. 12c: die Vorrichtung gemäß Fig. 12a zu einem dritten Zeitpunkt;
- Fig. 13a: in schematischer Darstellung eine geschnitten dargestellte Draufansicht einer dritten Ausführungsform einer erfindungsgemäßen Vorrichtung und einer Gefriertrocknungsanlage, zu einem ersten Zeitpunkt, geschnitten entlang Linie XIIIa - Xllla in Fig. 13c;
- Fig. 13b: eine Detailvergrößerung der erfindungsgemäßen Vorrichtung gemäß Fig. 13a entlang Linie XIIIb in Fig. 13a;
- Fig. 13c: eine geschnitten dargestellte Frontansicht auf die Vorrichtung und die Gefriertrocknungsanlage gemäß Fig. 13a, geschnitten entlang Linie XIIIb - Xlllb in Fig. 13a;
- Fig. 13d: eine geschnitten dargestellte Detailvergrößerung der Vorrichtung gemäß Fig. 13c, geschnitten entlang Linie XIIId - XIIId in Fig. 13c, zu einem ersten Zeitpunkt;
- Fig. 13e: die Detailvergrößerung der Fig. 13d, zu einem zweiten Zeitpunkt;
- Fig. 14a: in schematischer Darstellung eine geschnitten dargestellte Seitenansicht einer vierten Ausführungsform einer erfindungsgemäßen Vorrichtung und einer Gefriertrocknungsanlage, zu einem ersten Zeitpunkt, geschnitten entlang Linie XIVa - XIVa in Fig. 14b;
- Fig. 14b: eine geschnitten dargestellte Draufsicht auf die Vorrichtung und die Gefriertrocknungsanlage gemäß Fig. 14a, geschnitten entlang Linie XIVb - XIVb in Fig. 14a;
- Fig. 14c: eine geschnitten dargestellte Frontansicht auf die Vorrichtung und die Gefriertrocknungsanlage gemäß Fig. 14a, geschnitten entlang Linie XIVc - XIVc in Fig. 14a;
- Fig. 14d: eine Detailvergrößerung der erfindungsgemäßen Vorrichtung gemäß Fig. 14a entlang Linie XIVd in Fig. 14c;
- Fig. 14e: eine Detailvergrößerung der erfindungsgemäßen Vorrichtung gemäß 14a entlang Linie XIVe in Fig. 14b;
- Fig. 14f: eine geschnitten dargestellte Seitenansicht der Detailvergrößerung gemäß Fig. 14e, geschnitten entlang Linie XIVf - XIVf in Fig. 14e.

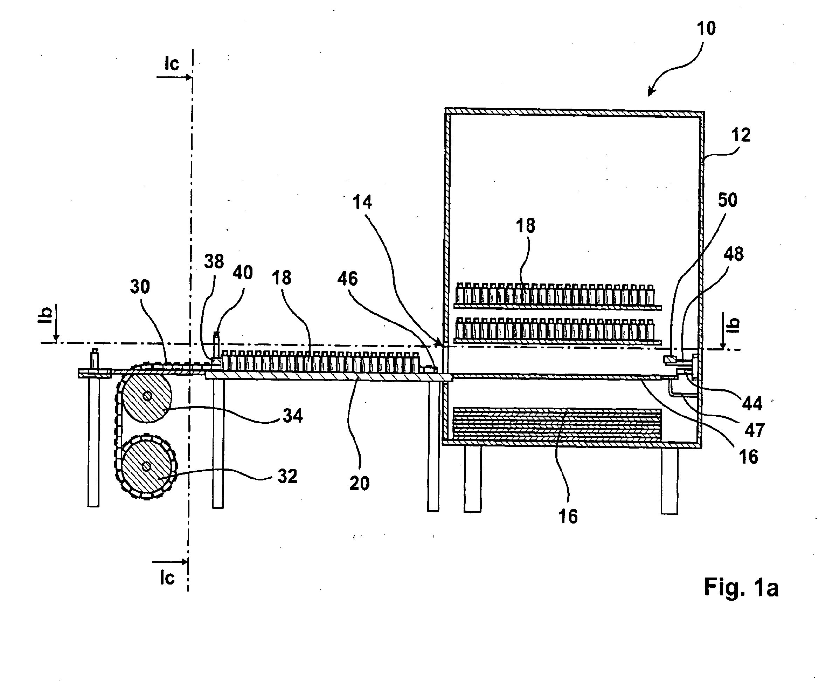

In den Fig. 1a bis 1f ist in einer schematischen Darstellung eine erfindungsgemäße Vorrichtung zum Be- und Entladen einer Stellplatte einer Gefriertrocknungsanlage und eine solche Gefriertrocknungsanlage 10 dargestellt. Diese Gefriertrocknungsanlage 10 umfasst eine große Kammer 12, die an einer Seite mit einer Öffnung 14 zum Be- und Entladen versehen ist. Diese Öffnung 14 kann mit einer hier nicht dargestellten Tür verschlossen werden. Im Inneren der Kammer 12 ist eine Anzahl von Stellplatten 16 vorgesehen, die über einen hier nicht dargestellten Mechanismus vertikal verfahrbar sind.

Die in der Zeichnung dargestellte Vorrichtung zum Be- und Entladen einer Stellplatte und die dazugehörige Gefriertrocknungsanlage sind nur schematisch dargestellt. Dabei wurden viele Einzelheiten weggelassen, um das Grundprinzip der Vorrichtung und der Gefriertrocknungsanlage deutlicher darstellen zu können.

Das zu trocknende Produkt wird üblicherweise in kleinen Fläschchen, sogenannten Vials 18 abgefüllt, wobei die Vials 18 vor dem Gefriertrocknungsprozess mit einem geöffneten Deckel versehen sind, während die Vials 18 nach dem Gefriertrocknungsprozess einen geschlossenen Deckel aufweisen, um das gefriergetrocknete Produkt nicht zu verschmutzen. Eine solche Vorrichtung zum Be- und Entladen einer Stellplatte einer Gefriertrocknungsanlage und die Gefriertrocknungsanlage selbst werden in der Regel in hochreinen Räumen aufgestellt, damit die in den Vials befindlichen Medikamente nicht verunreinigt werden. Das bedeutet aber auch, dass der gesamte Be- und Entladungsvorgang voll automatisch ablaufen muss.

Die Vorrichtung zum Be- und Entladen einer Stellplatte 16 einer Gefriertrocknungsanlage 10 mit einer Anzahl von Vials 18 umfasst einen Übergabetisch 20, auf dem die in der Regel einzeln oder reihenweise ankommenden Vials 18 so lange gesammelt werden, bis eine genügende Anzahl von Vials 18 auf dem Übergabetisch 20 zur Verfügung steht. Dabei ist der Übergabetisch 20 als plane ebene Fläche ausgebildet und wird rechts und links durch je ein Führungselement 22 begrenzt. In der hier dargestellten Ausführungsform ist das Führungselement 22 direkt mit dem Übergabetisch 20 verbunden, wobei die Oberseite des Führungselements 22 bündig mit der Oberseite des Übergabetisches 20 abschließt. Im Führungselement 22 ist am äußeren Rand eine Außennut 24 vorgesehen, die sich über die gesamte Länge des Führungselementes 22 erstreckt. Unmittelbar neben der Außennut 24 ist eine ein wenig nach innen versetzte und zu der Außennut 24 parallel angeordnete Innennut 26 vorgesehen, die sich ebenfalls über die gesamte Länge des Führungselements 22 erstreckt.

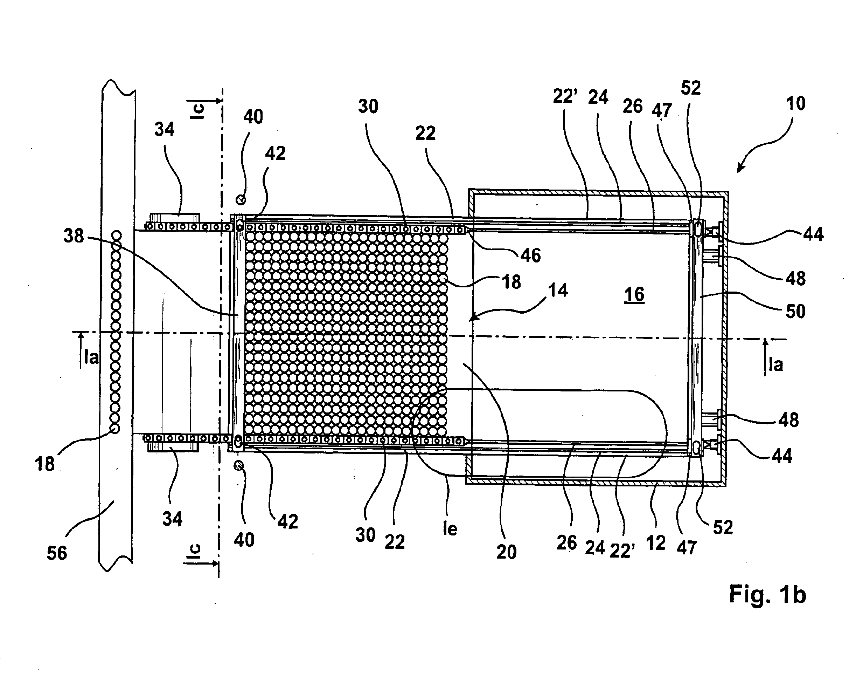

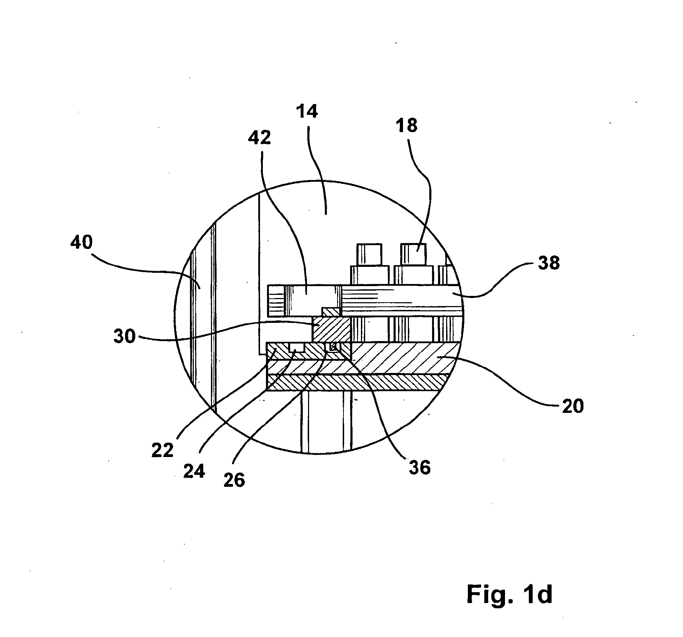

Wie insbes. Fig. 1b zu entnehmen ist, weist auch jede der Stellplatten 16 an ihrem rechten und linken Rand ein entsprechendes Führungselement 22' auf, welches ebenfalls je eine Außennut 24 und eine Innenut 26 besitzt. Zum Beladen der Stellplatte 16 wird diese in den Bereich der Öffnung 14 von der hier nicht dargestellten Hebemechanik gefahren, so dass das Führungselement 22 und das Führungselement 22' bündig aneinanderstoßen. Dies bewirkt, dass die Außennut 24 und die Innennut 26 des Führungselements 22 unmittelbar in die Außen- 24 und die Innennut 26 des Führungselementes 22' übergeht, wie dies insbesondere in der Fig. 1d deutlich wird.

Zwischen der Außennut 24 und der Innennut 26 sind in gewissen Abständen Verbindungsnuten 28 vorgesehen, die die Außennut 24 mit der Innennut 26 verbinden. Die Verbindungsnuten 28 sind um ein Vielfaches länger, als der Durchmesser des Führungsstiftes 36.

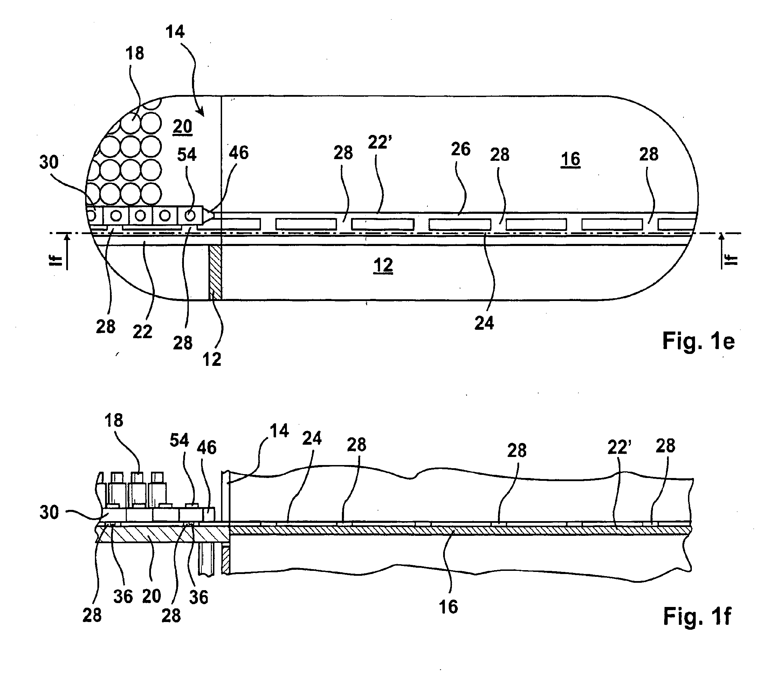

Auf den bündig mit dem Übergabetisch 20 angeordneten Führungselementen 22 ist je eine als Schubkette 30 ausgebildeter Transportschlitten angeordnet. Diese Schubkette 30 wird auf einer Walze 32 gespeichert und von dieser bewegt. Dabei bestimmt die Drehrichtung der Walze 32 die Bewegungsrichtung der Schubkette 30. Von der Walze 32 wird die Schubkette 30 um eine Umlenkrolle 34 zum Führungselement 22 am Übergabetisch 20 geführt. Die Schubkette 30 selber setzt sich aus einer Anzahl von einzelnen, gegeneinander beweglichen Gliedern zusammen, die bei einem Schubvorgang eine gewisse Steifigkeit aufweist und somit ähnlich einer Stange eingesetzt werden kann. An der Unterseite der Schubkette 30 sind in regelmäßigen Abständen Führungsstifte 36 angeordnet, wie insbesondere aus Fig. 1f ersichtlich ist. Zu dem in den Figuren 1a bis 1f dargestellten Zeitpunkt, greifen die Führungsstifte 32 der Schubkette 30 in die Innennut 26 des Führungselementes 22 ein und führen somit die Schubkette 30 zuverlässig am Rand des Übergabetisches 20 bzw. der Stellplatte 16. Es versteht sich, dass die Führungsstifte 36 auf die Größe der Innennut 26 bzw. der Außennut 24 abgestimmt sind. Wie weiter hinten ausführlicher erläutert werden wird, kann die Schubkette 30 mit ihren Führungsstiften 36 auch in der Außennut 24 geführt werden.

Zu der Schiebevorrichtung gehört neben der rechten und linken Schubkette 30 auch ein als Beladeschieber 38 ausgebildetes Beladeelement, der in einer Ablage 40 oberhalb des Übergabetisches 20 abgelegt werden kann, falls er nicht gebraucht wird. Dabei wird der Beladeschieber 38 so weit oben auf der Ablage 40 abgelegt, dass unter dem Beladeschieber 38 die Vials 18 hindurchgeführt werden können. Die Ablage 40 ist mit einer entsprechenden automatisierten Mechanik versehen und kann den Beladeschieber 38 auf die rechte und linke Schubkette 30 ablegen und zu gegebener Zeit von dort wieder abholen. Dabei greifen rechts und links am Beladeschieber 38 vorgesehene Langlöcher 42 in entsprechende Zapfen 54 auf einem der Glieder der Schubkette 30 ein, so dass der Beladeschieber 38 auf dieser Art und Weise zuverlässig auf der rechten und linken Schubkette 30 gehalten ist. Werden nun die rechte und die linke Schubkette 30 in Richtung der Stellplatte 16 bewegt, so wird der Beladeschieber 38 mitgenommen und schiebt dabei die auf dem Übergabetisch 20 vorhandenen Vials 18 vor sich her bis auf die Stellplatte 16.

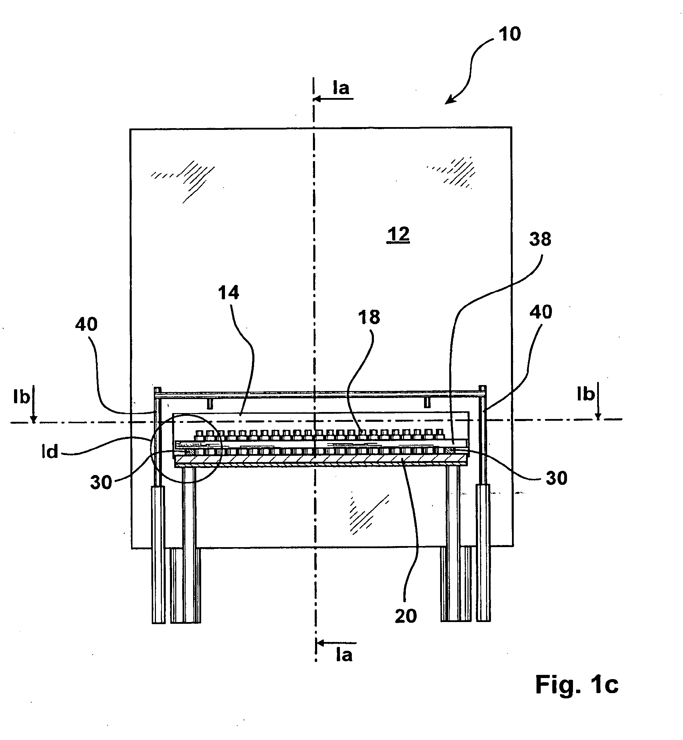

Wie insbesondere den Fig. 1b und 1c zu entnehmen ist, sind die rechte und die linke Schubkette 30 derart auf dem Übergabetisch 20, das heißt auf dem Führungselement 22 angeordnet, dass die Schubketten 30 eine seitliche Begrenzung zur Übergabetisches 20 bilden. Die Vials 18 werden so dicht auf dem Übergabetisch 20 platziert, dass die jeweils am Rand befindlichen Vials 18 an der entsprechenden Schubkette 30 anstoßen können. Analoges gilt auch für die Stellplatte 16.

Zur Vorrichtung zum Be- und Entladen einer Stellplatte gehören auch zwei Zentriervorrichtungen 44, welche an einer der Öffnung 14 gegenüberliegenden Wand der Kammer 12 der Gefriertrocknungsanlage 10 angebracht sind. Jede dieser Zentriervorrichtungen 44 ist so positioniert, dass sie eine Spitze 46 der Schubkette 30 aufnehmen kann, sobald diese den hinteren Rand der Stellplatte 16 passiert hat. Dabei ist die Zentriervorrichtung 44 horizontal verschiebbar, um die Schubkette 30 von der Innennut 26 in die Außennut 24 zu überführen und umgekehrt. Einzelheiten hierzu werden nachfolgend unter dem Beladungsverfahren detailliert beschrieben.

Um ein herunterfallen der Spitze 46 der Schubkette 30 zu verhindern, wenn diese Spitze 46 über den hinteren Rand der Stellplatte 16 hinausragt, ist an dieser Stelle ein Stütztisch 47 vorgesehen. Hierdurch wird erreicht, dass die Spitze 46 stets in die Zentriervorrichtung 44 findet.

Zur Vorrichtung zum Be- und Entladen einer Stellplatte 16 einer Gefriertrocknungsanlage 10 gehört des Weiteren eine Haltemimik 48 zur Aufnahme eines Entladeschiebers 50. Genauso wie die Zentriervorrichtung 44 ist auch die Haltemimik 48 an einer der Öffnung 14 gegenüberliegenden Wand der Kammer 12 der Gefriertrocknungsanlage 10 angebracht. Es versteht sich, dass sowohl die Zentriervorrichtung 44 als auch die Haltemimik 48 zusammen mit dem Entladeschieber 50 derart an der Kammer 12 angebracht sind, dass die vertikale Bewegung der Stellplatten 16 hierdurch nicht behindert wird. Die Haltemimik 48 trägt den Entladeschieber 50, sofern er nicht zum Entladen der Stellplatten 16 benötigt wird. Andererseits ist die Haltemimik 48 in der Lage, im Entladeschieber 50 derart auf die bis hinter den hinteren Rand der Stellplatte 16 ausgefahrenen Schubketten 30 aufzusetzen, dass am rechten und linken Rand befindliche Langlöcher 52 des Entladeschiebers 50 in entsprechende Zapfen 54 auf der Schubkette 30 eingreifen, so dass die rechte und die linke Schubkette 30 den Entladeschieber 50 mitführen kann.

Das Verfahren zum Be- und Entladen der Stellplatte 16 der Gefriertrocknungsanlage 20 mit einer Anzahl von Vials 18 wird nachfolgend detailliert beschrieben:

Zum Beladen einer Stellplatte 16 der Gefriertrocknungsanlage 10 wird von dem Stapel am Boden der Kammer 20 die oberste Stellplatte 16 mit einer hier nicht dargestellten Mechanik so weit hochgefahren, dass die Stellplatte 16 bündig mit dem Übergabetisch 20 abschließt. Es versteht sich, dass zuvor die hier nicht dargestellte Tür der Gefriertrocknungsanlage 10 geöffnet wurde. Auf dem Übergabetisch 20 werden von einer hier nur schemenhaft angedeuteten Zuführeinrichtung 56 herangeführte Vials 18 gesammelt. Diese Vials 18 werden dabei reihenweise aufgestellt, wobei eine Reihe von Vials 18 von einer rechten Schubkette 30 bis zu einer linken Schubkette 30 reicht. Dabei sind die Abstände so bemessen, dass die hier gewünschte Anzahl von Vials 18 möglichst passgenau zwischen die Schubketten 30 passt. Dabei sind die Schubketten 30 so weit ausgefahren, dass ihre vordere Spitze noch vor der ersten Reihe von Vials 18 auf dem Übergabetisch 20 liegt. Sobald sämtliche Vials 18 auf dem Übergabetisch versammelt sind, legt die Ablage 40 den Beladeschieber 38 von seiner erhöhten Position herunter auf die rechte und die linke Schubkette 30, wobei die Langlöcher 42 des Beladeschiebers 38 einen auf der Oberseite der Schubkette 30 angebrachten Zapfen 54 aufnehmen.

Anschließend wird die Walze 32 in Gang gesetzt und treibt die rechte und die linke Schubkette 30 zusammen mit dem Beladeschieber 38 derart voran, dass die Vials 18 vom Übergabetisch 20 auf die Stellplatte 16 geschoben werden. Dabei bewegen sich die Vials 18, die rechte und die linke Schubkette 30 und der Beladeschieber 38 zwangsläufig mit derselben Geschwindigkeit, so dass zwischen den am Rand angeordneten Vials 18 und den Schubketten 30 keine Reibung entsteht. Hierdurch wird erreicht, dass beim Beladen der Stellplatte 16 keine Reibung zwischen den Vials 18 und der Schubkette entsteht und somit auch keine Vials 18 umkippen können. Ein weiterer Vorteil besteht darin, dass durch dieses geordnete Verschieben der Vials 18 die auf dem Übergabetisch 20 aufgebaute Reihenfolge und Ordnung der Vials 18 erhalten bleibt.

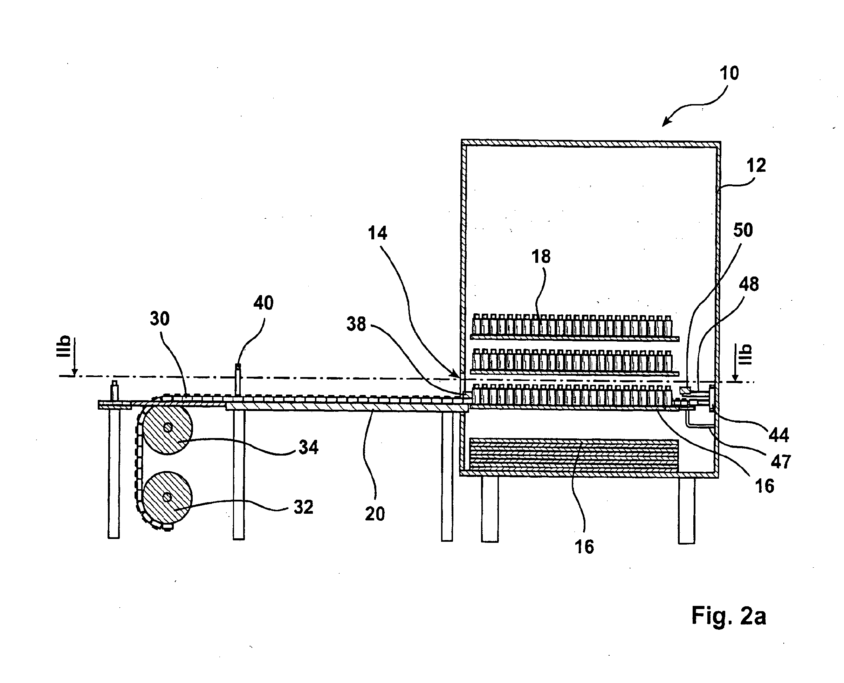

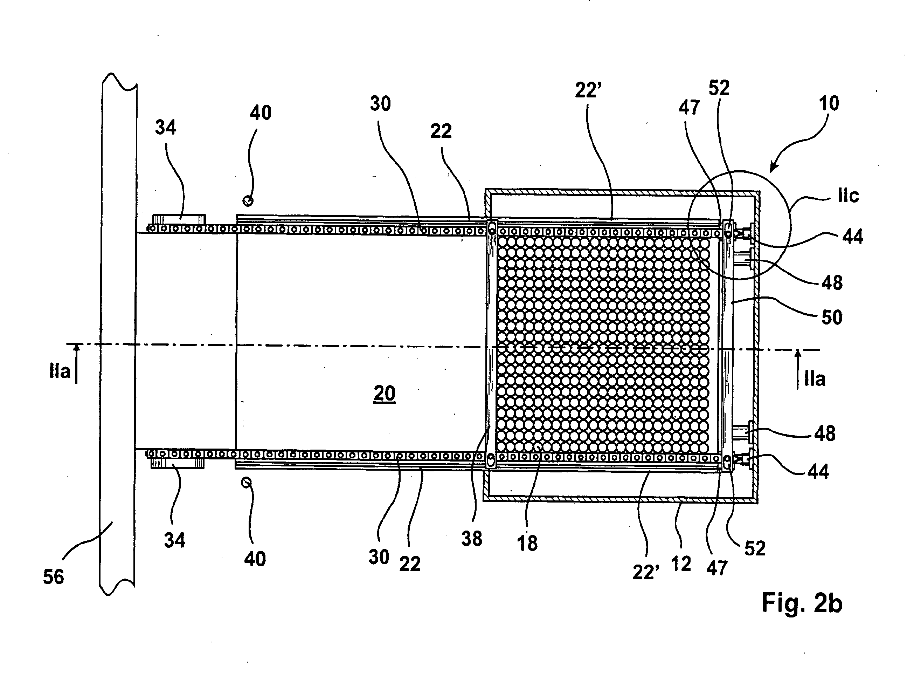

In den Fig. 1a bis 1f ist die erfindungsgemäße Vorrichtung und die Gefriertrocknungsanlage 10 in einem ersten Zeitpunkt dargestellt, kurz bevor die Vials 18 vom Übergabetisch 20 auf die Stellplatten verschoben werden. In den Fig. 2a bis 2c ist ein zweiter Zeitpunkt dargestellt, zu dem die Vials 18 vollständig auf der Stellplatte 16 angekommen sind und zu dem sich die Schubketten 30 in ihrer voll ausgefahrenen Endstellung befinden.

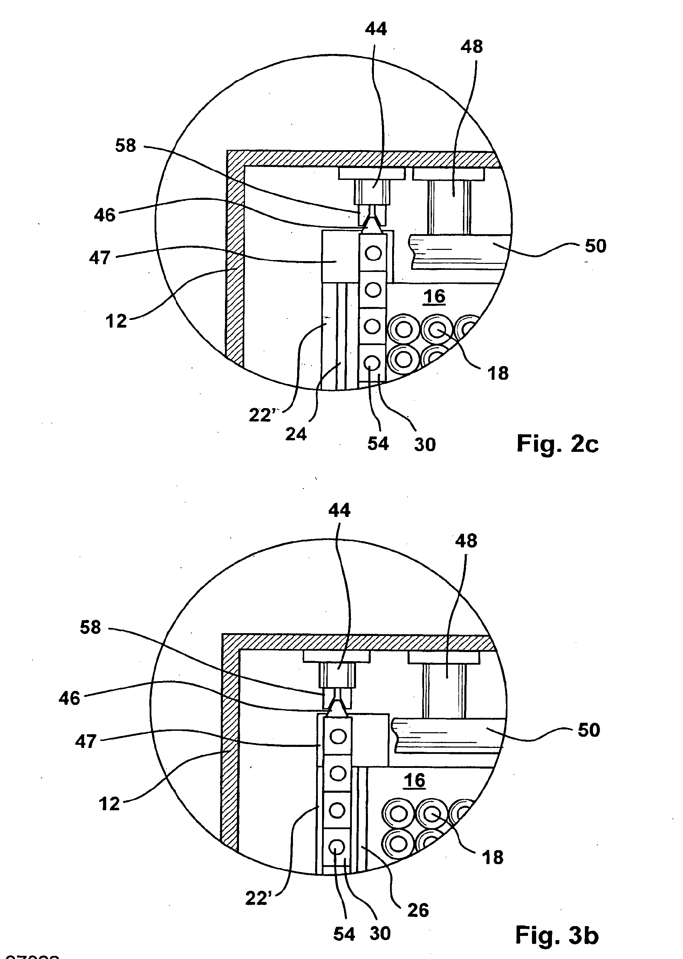

Wie insbesondere Fig. 2c zu entnehmen ist, wird die Spitze 46 der Schubkette 30 von der Zentriervorrichtung 44 erfasst, sobald die Schubkette 30 in ihrer Endstellung angelangt ist, wobei die Spitze 46 auf dem Stütztisch 47 aufliegt. Dabei fixiert die Zentriervorrichtung 44 die Spitze 46 der Schubkette 30 mit und schiebt die Spitze 46, und somit zumindest einen Teil der Schubkette 30, von der Innennut 26 auf die Außennut 24. Gleichzeitig wird am anderen Ende der Schubkette 30 die Umlenkrolle 34 ebenfalls nach außen versetzt, so dass dieser Teil der Schubkette 30 ebenfalls von der Innennut 26 auf die Außennut 24 überführt wird. Nun sind große Teile der Schubkette 30 in der Außennut 24, wobei im mittleren Bereich der Schubkette 30 Teile noch auf der Innennut 26 oder in den Verbindungsstegen 28 sein können. Sobald aber der Schubkettenantrieb die Schubkette 30 anzieht, werden auch sämtliche verbleibenden Teile der Schubkette 30 in die Außennut 24 gezogen.

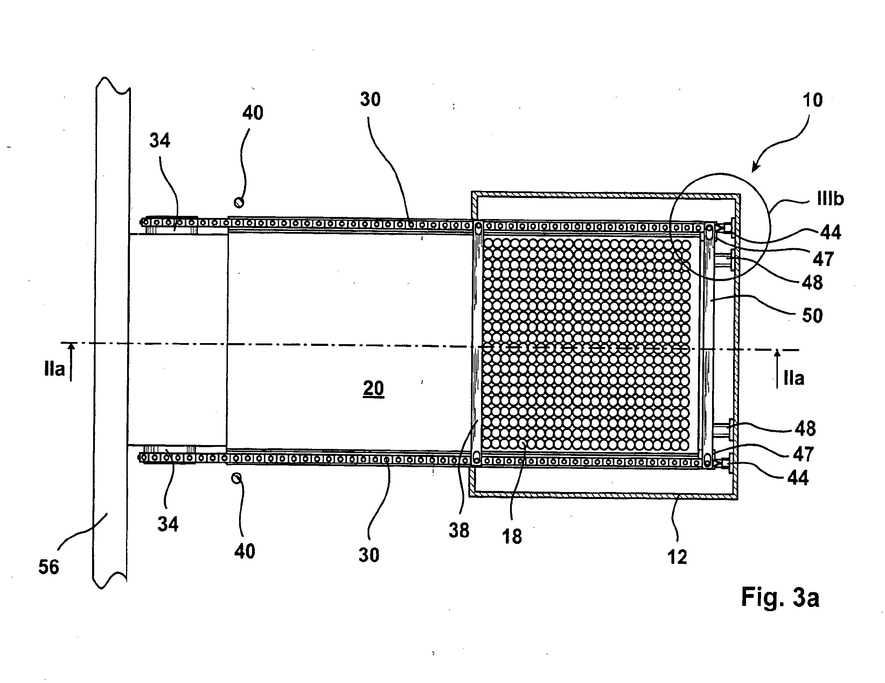

Wie insbesondere Fig. 3b zu entnehmen ist, ist die Schubkette 30 nunmehr in der Außennut 24 geführt und von den Vials 18 deutlich beabstandet. In den Fig. 3 und 3b ist dieser dritte Zeitpunkt dargestellt.

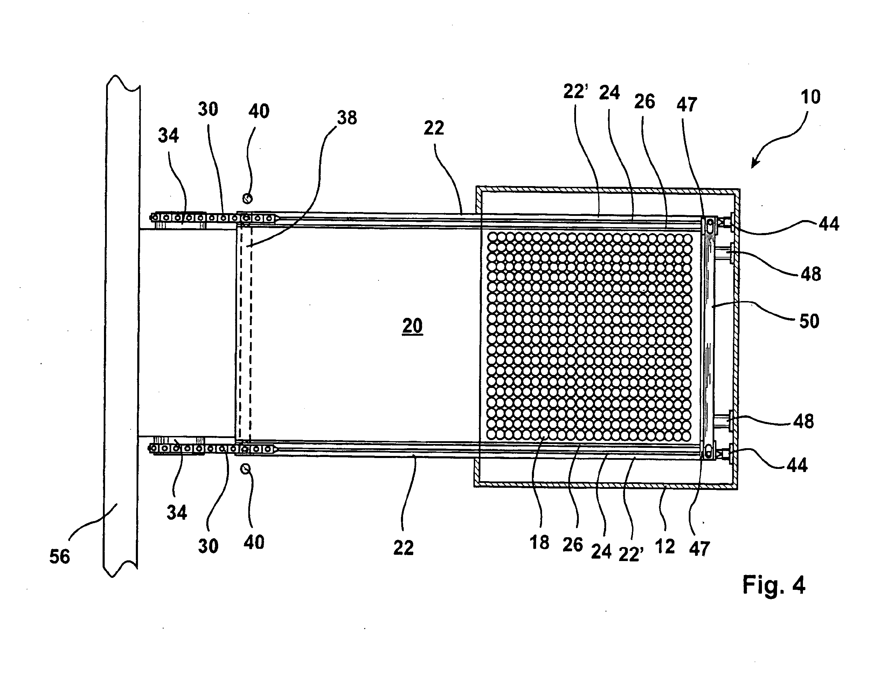

Danach werden die beiden Schubketten 30 zusammen mit dem Beladeschieber 38 aus der Gefriertrocknungsanlage 10 wieder herausgezogen, wobei sich die Schubkette 30 auf der Walze 32 aufwickelt, wie insbesondere aus Fig. 4, ersichtlich ist. An der Ablage 40 angekommen, wird der Beladeschieber 38 von der Ablage 40 erfasst und hochgehoben.

Sobald die Schubkette 30 möglichst weit auf der Walze 32 aufgewickelt ist, werden den in Fig. 4 nicht näher dargestellten Umlenkrollen 34 wieder nach innen bewegt, so dass die Schubkette 30 von der Außennut 24 in die

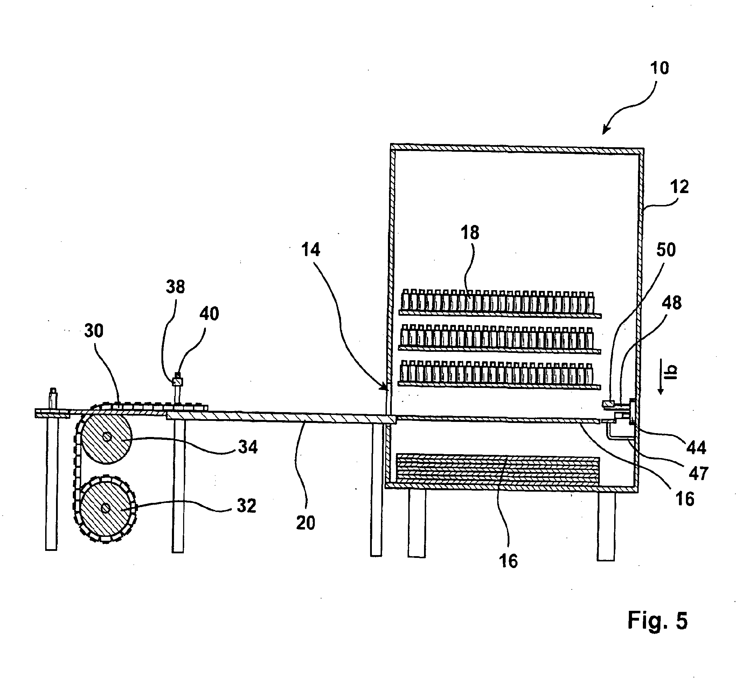

Innennut 26 überführt wird. Es versteht sich, dass beim Überführen der Schubkette 30 von der Außennut 24 in die Innennut 26 die Unterhalb der Schubkette 30 angeordneten Führungsstifte 36 über die Verbindungsnuten 28 geführt werden, wie dies insbesondere in den Figuren 1e und 1f illustriert ist. Damit einhergehend wird die vollständig beladene Stellplatte 16 zusammen mit den zuvor beladenen Stellplatten 16 innerhalb der Kammer 12 weiter nach oben bewegt und es wird eine nächste Stellplatte 16 vom Stapel bis an den Übergabetisch 20 herangeführt, wie dies zu einem fünften Zeitpunkt in Fig. 5 dargestellt ist. Nun kann der Beladevorgang erneut beginnen.

Sobald sämtliche Stellplatten 16 derart beladen sind, wird der Übergabetisch 20 von der Gefriertrocknungsanlage 10 abgezogen und die hier nicht dargestellte Tür der Gefriertrocknungsanlage verschlossen, um den eigentlichen Gefriertrocknungsvorgang durchzuführen.

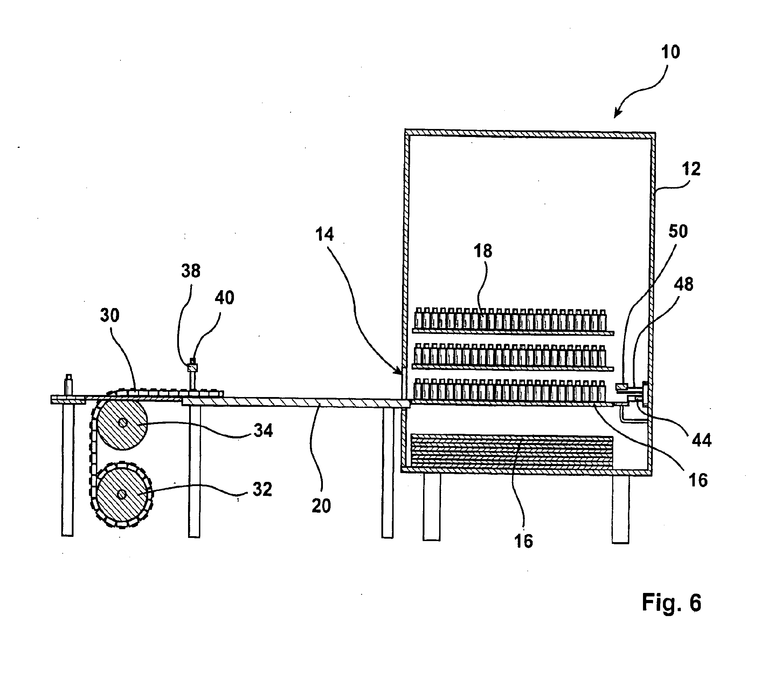

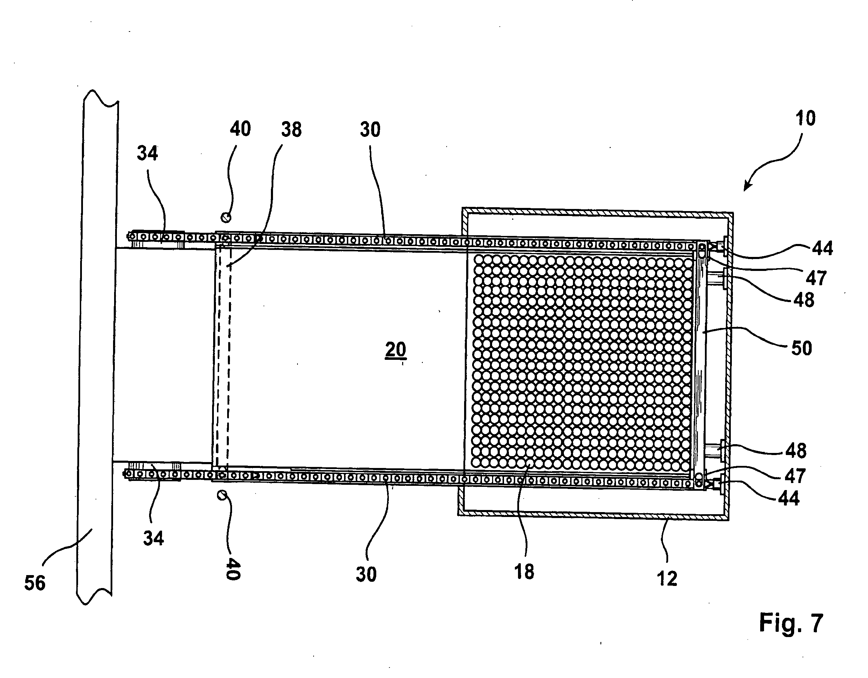

Nachdem der Gefriertrocknungsvorgang beendet ist, werden die Stellplatten 16 entweder gleichzeitig oder nacheinander so weit vertikal nach unten gefahren, dass die Stellplatte auf den darunter liegenden Vials zur Anlage kommt und dabei die in den Vials befindlichen Deckel nach unten drückt und somit verschließt. Anschließend werden die Stellplatten 16 wieder ein wenig voneinander beabstandet, so dass ein Entladen der Stellplatten möglich ist. Nun wird die Tür der Gefriertrocknungsanlage 10 wieder geöffnet und der Übergabetisch 20 an die Öffnung 14 herangefahren, um die erste Stellplatte 16 zu entladen. In dem in Fig. 6 dargestellten sechsten Zeitpunkt sind bereits einige Stellplatten 16 entladen und am Boden der Kammer 12 gestapelt. Eine weitere Stellplatte 16 ist bündig an den Übergabetisch 20 herangefahren und zum Entladen bereit. Hierzu werden nun die beiden Schubketten 30 in der jeweiligen Außennut 24 auf den Führungselementen 22 und 22' ohne den Beladungsschieber 30 in die Gefriertrocknungskammer 12 so weit hineingefahren, bis die Spitze 46 der Schubkette 30 die Zentriervorrichtung 44 erreicht, so dass die Zange 58 die Spitze 46 der Schubkette 30 fixiert, wie dies zum siebten Zeitpunkt gemäß Fig. 7 dargestellt ist.

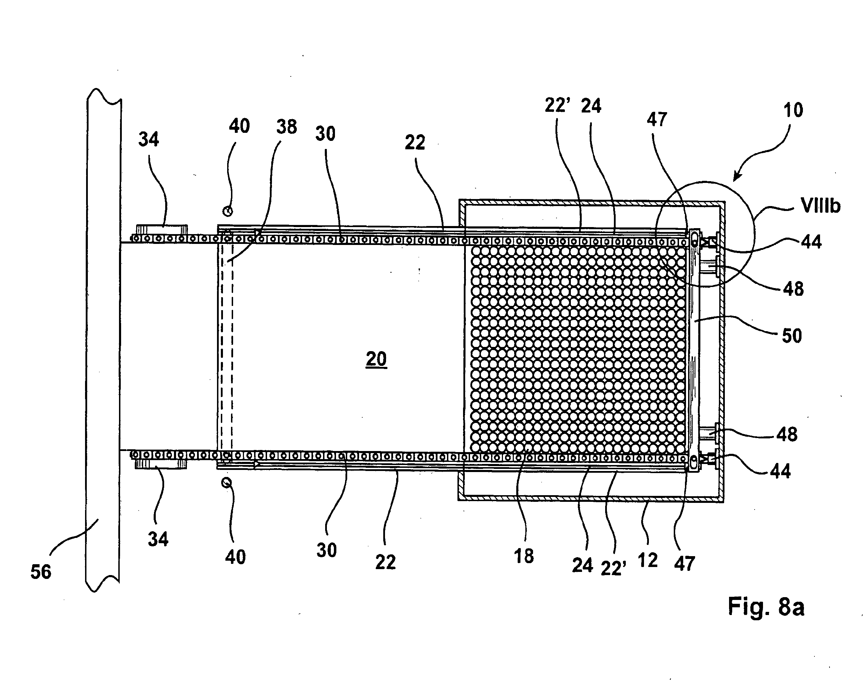

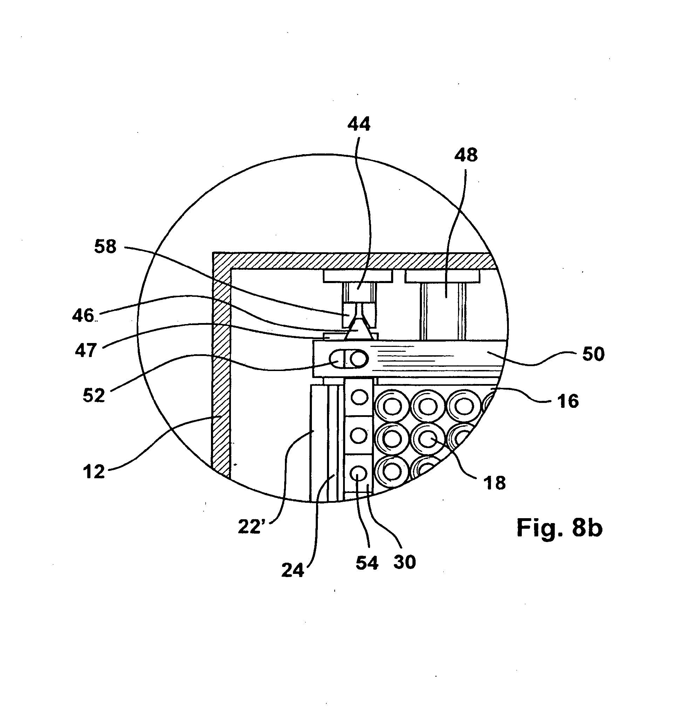

Anschließend wird die Umlenkrolle 34 und die Zentriervorrichtung 44 wieder in die entgegengesetzte Richtung bewegt, so dass die Schubketten 30 von der Außennut 24 in die Innennut 26 verschoben werden, wie dies zum achten Zeitpunkt in den Fig. 8a und 8b dargestellt ist.

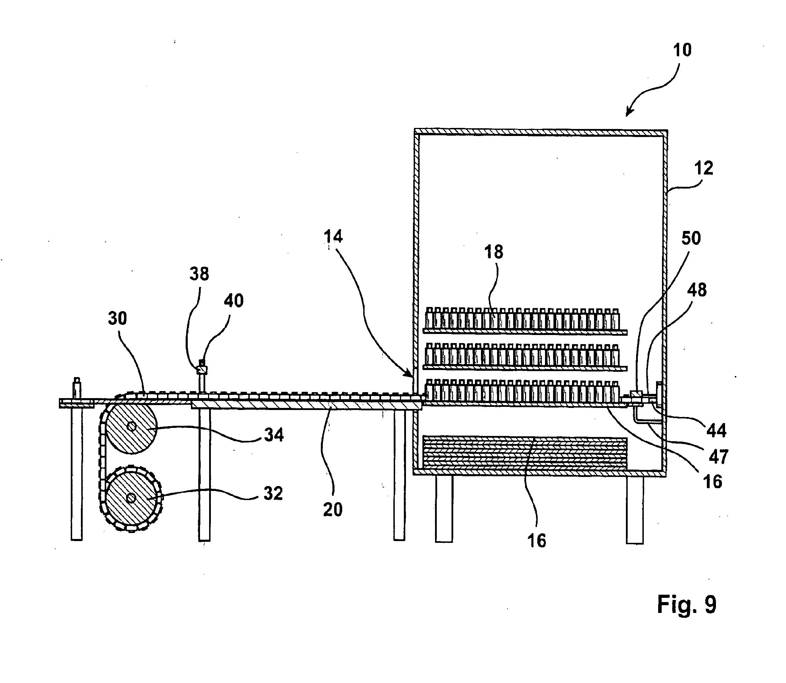

Danach setzt die Haltemimik 48 den Entladeschieber auf ein vorderstes Glied der Schubkette 30, so dass der Zapfen 54 in das Langloch 52 des Entladeschiebers 50 eingreift und diesen somit hält. Dieser neunte Zeitpunkt ist in Fig. 9 dargestellt.

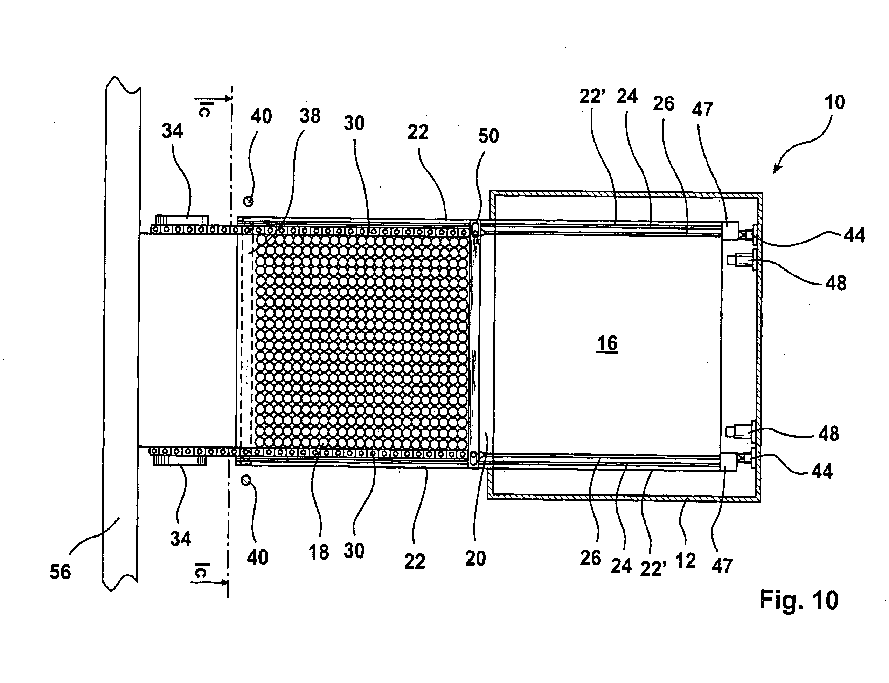

Als nächstes zieht die Walze 32 die Schubketten 30 zusammen mit dem Entladeschieber 50 aus der Kammer 12 heraus, wobei sich die Schubketten 30 wieder auf der Walze 32 aufwickeln. Sobald sämtliche Vials 18 auf dem Übergabetisch 20 angekommen sind, wie dies zum zehnten Zeitpunkt in Figur 10 dargestellt ist, werden die Vials 18 über eine hier nicht dargestellte Abführeinrichtung 56 zur weiteren Verarbeitung abtransportiert. Da auch beim Herausholen der Vials 18 aus der Gefriertrocknungsanlage 10 keine Relativbewegung zwischen den am äußeren Rand befindlichen Vials 18 und der Schubkette 30 stattfindet, behalten die Vials 18 ihre Positionen relativ zu den anderen Vials 18 bei. Hierdurch ist es möglich, über eine Qualitätskontrolle des in den Vials befindlichen Gutes Aussagen über die Qualität des Gefriertrocknungsvorgangs zu treffen. Auch ist es durch diese bekannte Position der einzelnen Vials 18 möglich, zu einem späteren Zeitpunkt diejenigen Vials 18 aus der Anlage heraus zu sortieren, die an kritischen Punkten der Stellplatte 16 gewesen sind. Hierdurch wird die Qualitätskontrolle des Gefriertrocknungsvorgangs erleichtert, da lediglich die bekannten kritischen Vials 18 einer Qualitätsprüfung unterzogen werden brauchen, um die Qualität des Gefriertrocknungsvorgangs ermitteln zu können.

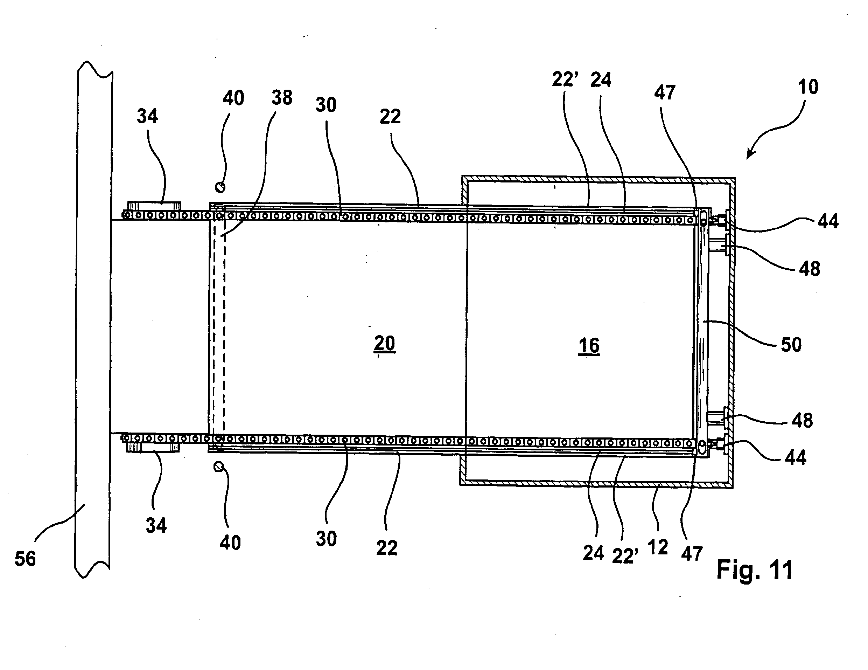

Nachdem alle Vials abtransportiert sind, werden die Schubketten 30 zusammen mit dem Entladeschieber 50 wieder bis an die hintere Wand der Kammer 12 herangefahren, damit die Haltemimik 48 den Entladeschieber 50 wieder aufnehmen kann, wie dies zum elften Zeitpunkt gemäß Fig. 11 ersichtlich ist. Anschließend ergreifen die Zentriervorrichtungen 44 wieder die Spitzen 46 der Schubketten 30 und überführen Schubketten 30 in der zuvor beschriebenen Art und Weise von der Innennut 26 in die Außennut 24, bevor die Schubketten 30 von der Walze 32 wieder aus der Gefriertrocknungsanlage herausgezogen werden. Nun wird die mittlerweile geleerte Stellplatte 16 auf dem Stapel am Boden der Kammer 12 abgelegt und die nächste Stellplatte 16 wird an den Übergabetisch 20 zum Entleeren herangeführt, bevor die nächste Stellplatte 16 in der beschriebenen Weise entleert wird. Dieser Vorgang wird so oft wiederholt, bis sämtliche Stellplatten 16 leer sind.

Die Anbringung des Entladeschiebers 50 an der hinteren Wand der Kammer 12 hat den Vorteil, dass der Entladeschieber nicht über die frisch verschlossenen Vials 18 herübergeführt werden braucht, um die Vials 18 von der Stellplatte 16 herunter zu holen. Hierdurch wird erreicht, dass der vertikale Abstand benachbarter Stellplatten 16 verringert werden kann, so dass bei gleicher Baugröße der Kammer zusätzliche Stellplatten integriert werden können, was wiederum die Wirtschaftlichkeit der Gefriertrocknungsanlage erhöht.

Ein weiterer Vorteil besteht darin, dass die manchmal an der oberen Stellplatte anhaftenden Vials durch das Hereinfahren des Entladeschiebers nicht mehr gelöst und umgestoßen werden können. Mit dem hinter den Stellplatten angeordneten Entladeschieber wird erreicht, dass die an den oberen Stellplatten haftenden Vials erst dann wieder gelöst werden, wenn sich das gesamte Feld der Vials Richtung Ausgang bewegt. In diesem Fall wird aber das von oben herunterfallende Vial durch die benachbarten Vials geführt, so dass dieses Vial nicht herunterfallen kann. Begünstigt wird dieser Umstand auch dadurch, dass der Freiraum zwischen der Oberkante der Vials und der Unterseite der nächsten Stellplatte geringer ausfällt. Anders ausgedrückt kann man auch sagen, das Vial kann beim Ablösen von der oberem Stellplatte nicht so tief allen und somit wird die Wahrscheinlichkeit eines Umkippens des Vials auf ein Minimum reduziert.

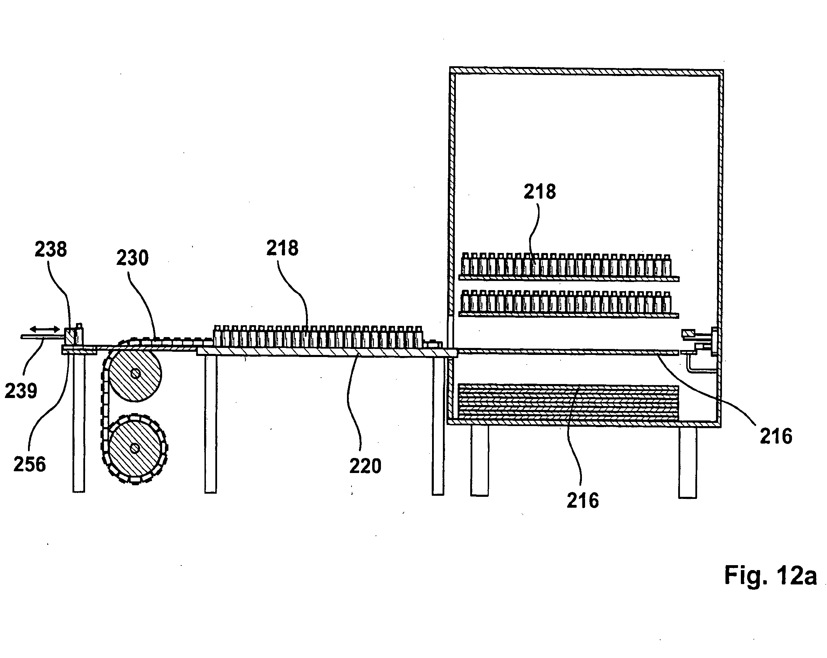

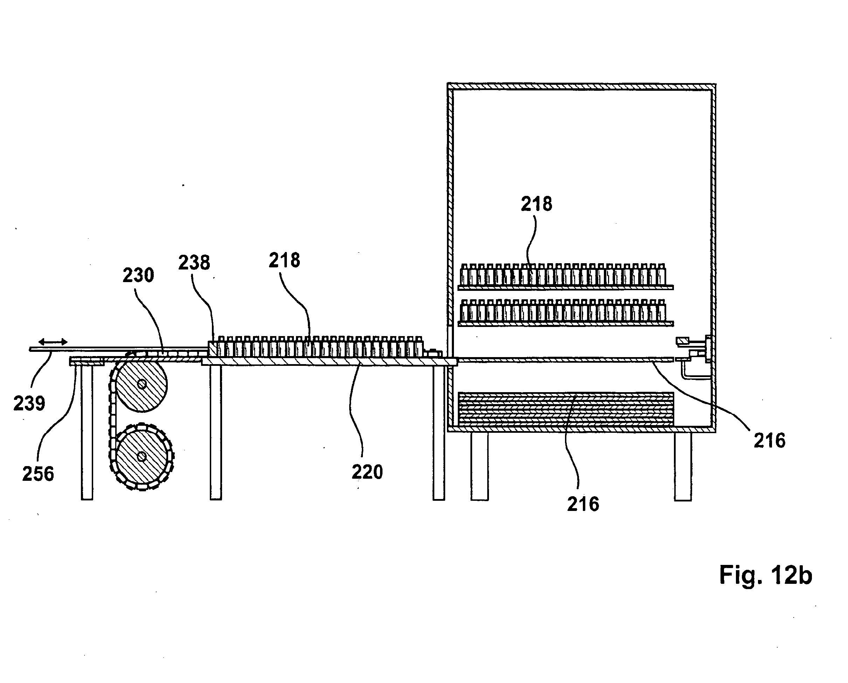

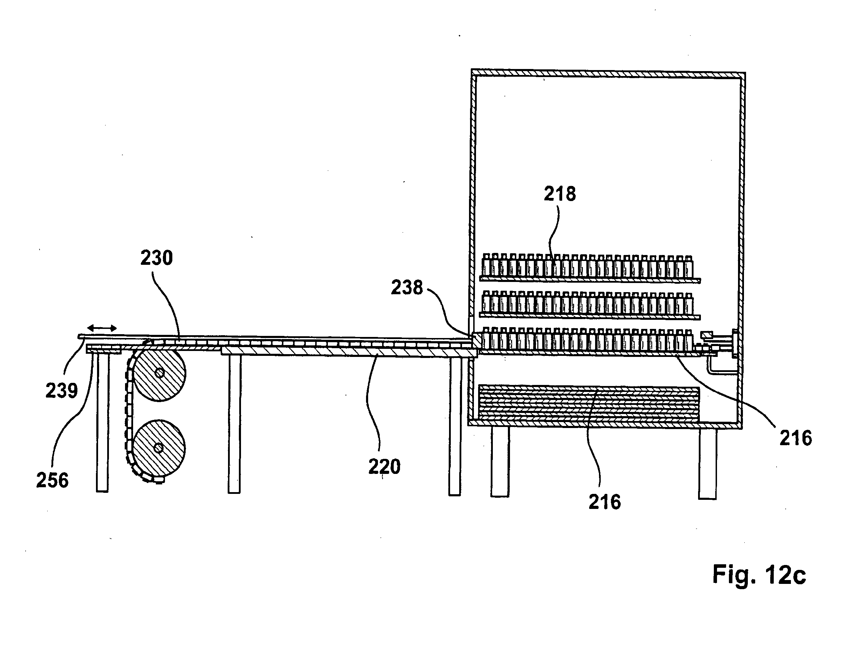

In den Fig. 12a bis 12c ist eine zweite Ausführungsform einer erfindungsgemäßen Vorrichtung schematisch dargestellt. Diese zweite Ausführungsform unterscheidet sich von der in den Fig. 1a bis 1f dargestellten ersten Ausführungsform lediglich dadurch, dass statt dem Beladeschieber ein Puscher 238 zum Verschieben der Vials 218 eingesetzt wird. Dieser Puscher 238 wird von einer separaten, hier nicht dargestellten Apparatur bewegt, wobei die Apparatur über eine Verbindungsstange 239 mit dem eigentlichen Puscher 238 verbunden ist. Dieser Puscher erstreckt sich über die gesamte Breite des Übergabetisches 220, also von der linken Schubkette 230 bis zur rechten Schubkette 230. Wie insbesondere Fig. 12a zu entnehmen ist, werden die Vials 218 über die Zuführeinrichtung 256 angeliefert. von hier werden die Vials 218 durch den Puscher 238 auf den Übergabetisch 220 geschoben. Sobald genügend Vials 218 auf dem Übergabetisch versammelt sind, setzt der Puscher 238 an den vordersten Vials 218 an und schiebt alle auf dem Übergabetisch 220 befindlichen Vials 218 auf die Stellplatte 216, wie auch aus den Fig. 12b und 12c ersichtlich ist. Dabei werden die Schubketten 230 mit derselben Geschwindigkeit wie der Puscher 238 vorangetrieben, damit zwischen den Schubketten 230 und den daran anliegenden Vials 218 keine Reibung entsteht, so keine Vials 218 umfallen und die Vials 218 in der vorgegebenen Sortierung auf der Stellplatte 216 ankommen. Im Übrigen ist diese zweite Ausführungsform mit der in den Fig. 1a bis 1f dargestellten und oben beschriebenen ersten Ausführungsform identisch.

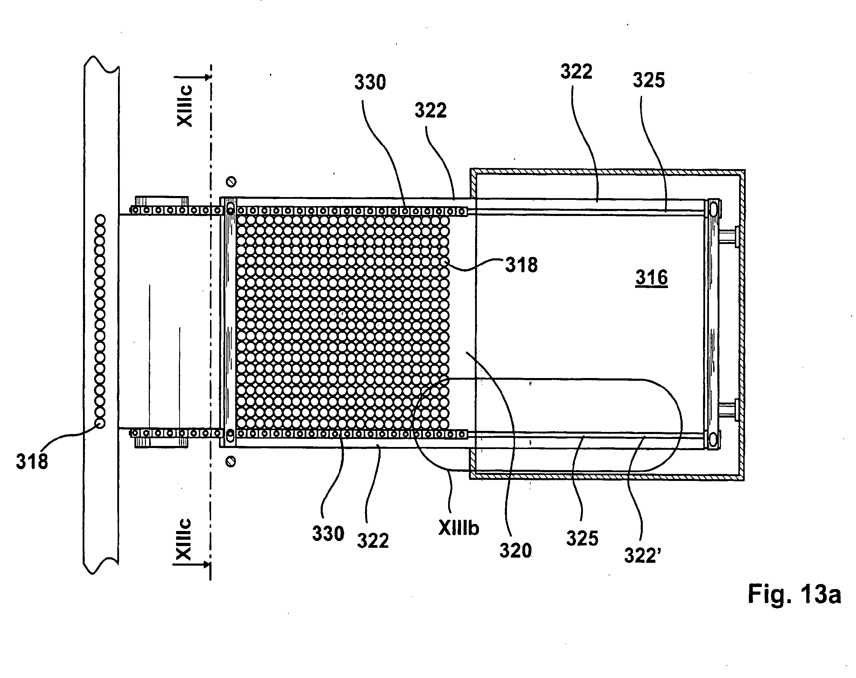

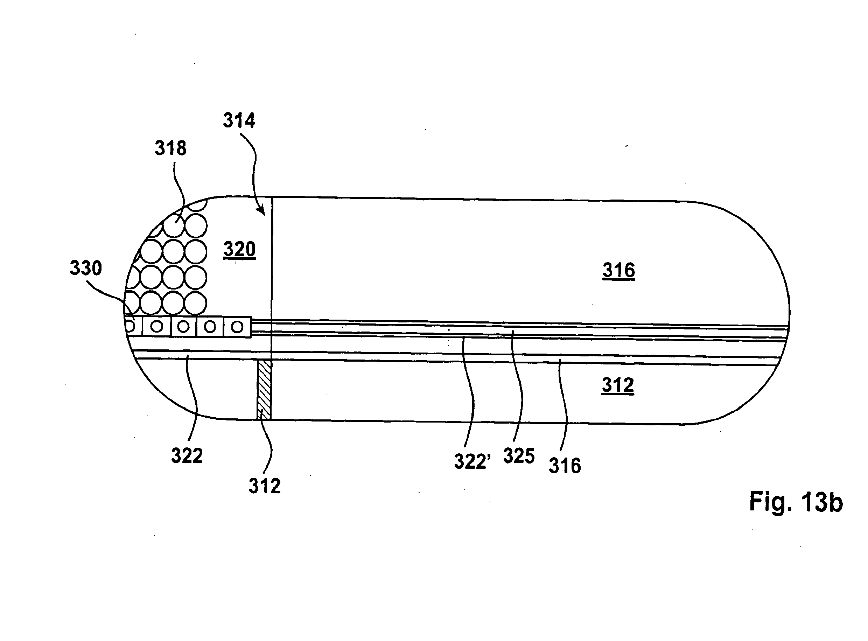

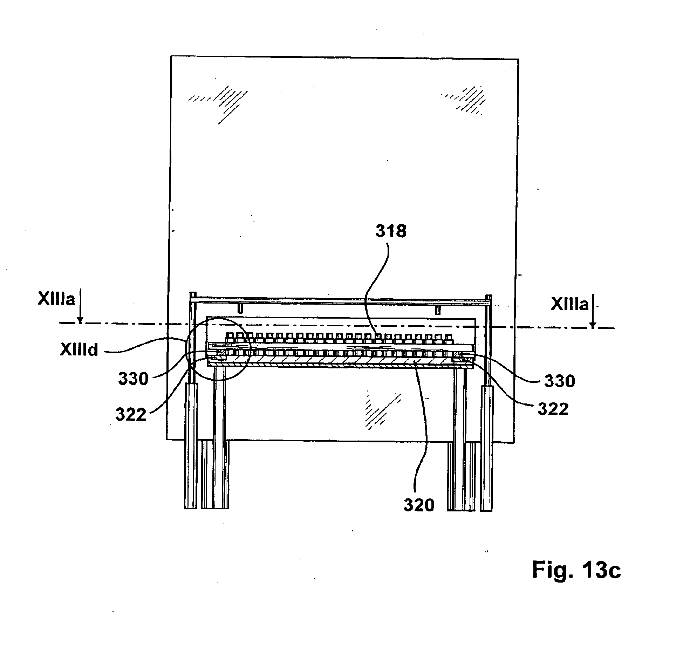

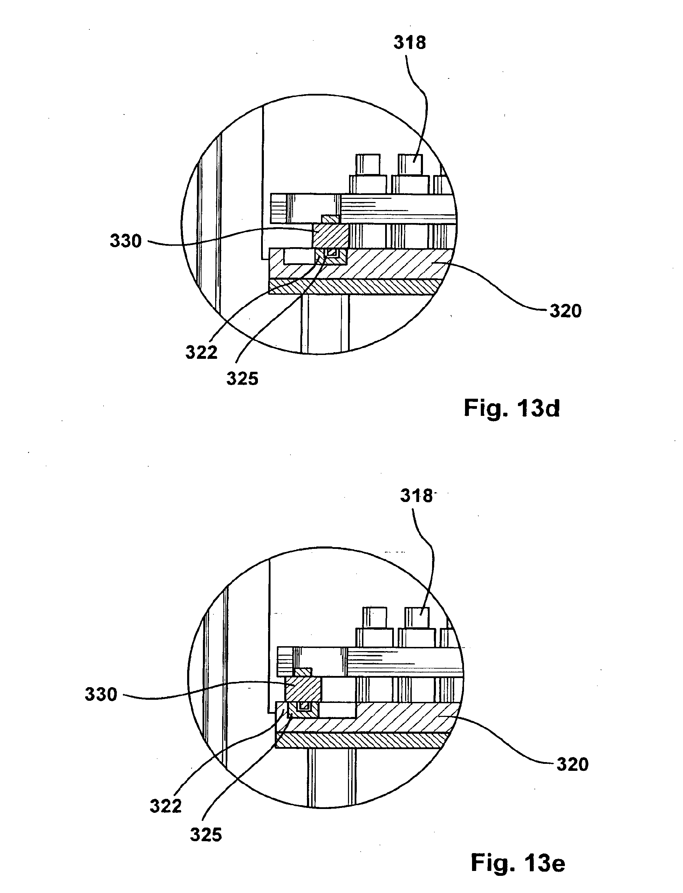

In den Fig. 13a bis 13e ist eine dritte Ausführungsform einer erfindungsgemäßen Vorrichtung schematisch dargestellt. Diese dritte Ausführungsform unterscheidet sich von der in den Fig. 1a bis 1f dargestellten ersten Ausführungsform lediglich dadurch, dass das am Übergabetisch 320 gehaltene Führungselement 322 und das an der Stellplatte 316 gehaltenen Führungselement 322' nur eine einzige Führungsnut 325 aufweist und dass keine Zentriervorrichtung vorgesehen ist. Stattdessen sind die Führungselemente 322 und 322' seitlich verschieblich an dem Übergabetisch 320 und der Stellplatte 316 gehalten, wobei die Führungselemente 322 und 322' nach rechts und nach links um 1 mm bis 30 mm, vorzugsweise 15 mm, verschieblich sind, so dass der als Schubkette 330 ausgebildete Transportschlitten bei bedarf von den Vials 318 beabstandet werden kann. Dies geschieht vorzugsweise immer dann, wenn die Schubkette 330 eine Leerfahrt auszuführen hat, um von den normalerweise an der Schubkette 330 anliegenden Vials 318 einen Abstand zu bekommen, damit diese Vials 318 nicht versehentlich umgestoßen werden oder von ihrer angestammten Position verschoben werden. Die seitlich verschiebbaren Führungselemente 322 und 322' werden dabei von einer pneumatischen Steuerung bedient. Im Übrigen ist diese dritte Ausführungsform mit der in den Fig. 1a bis 1f dargestellten und oben beschriebenen ersten Ausführungsform identisch.

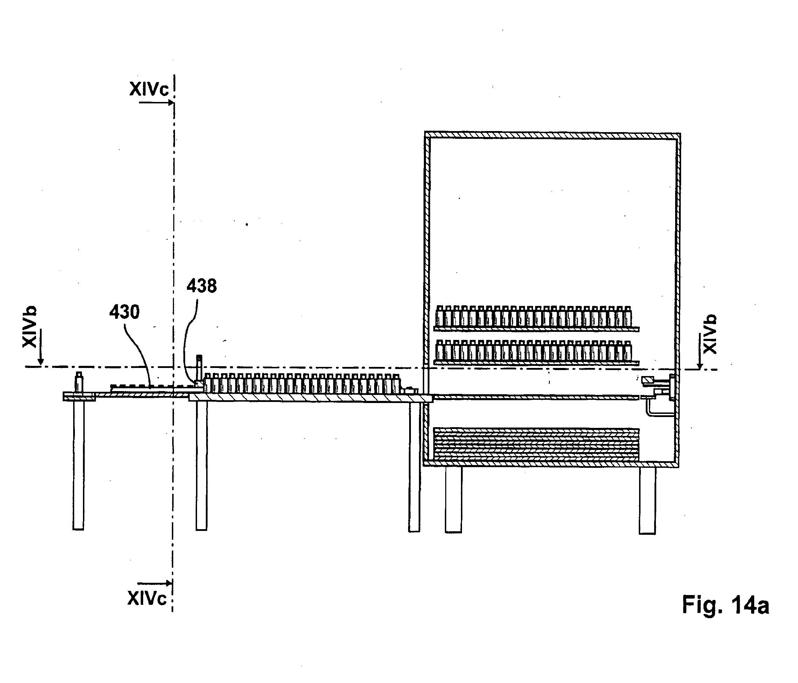

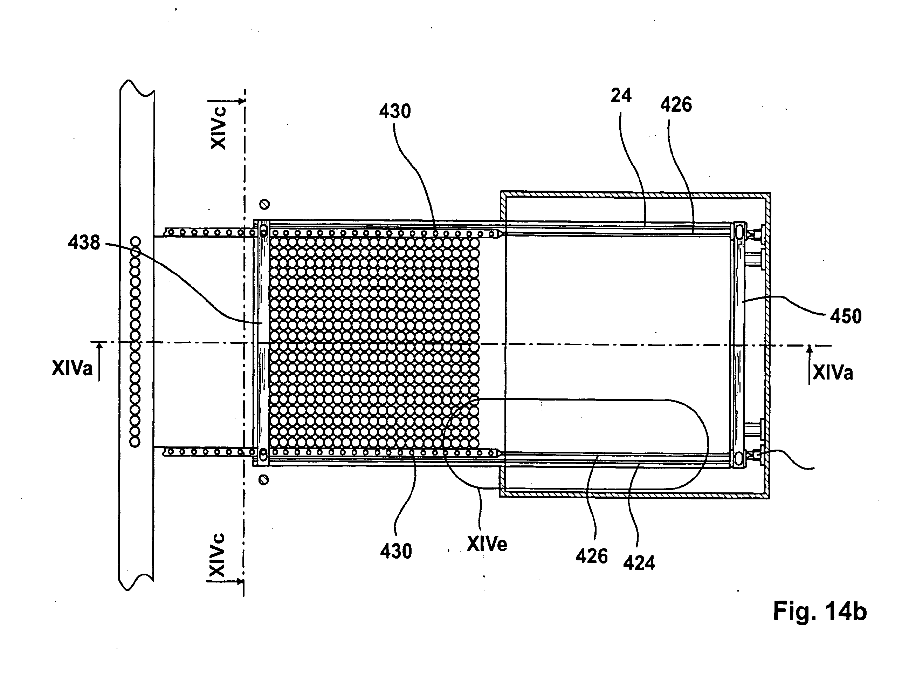

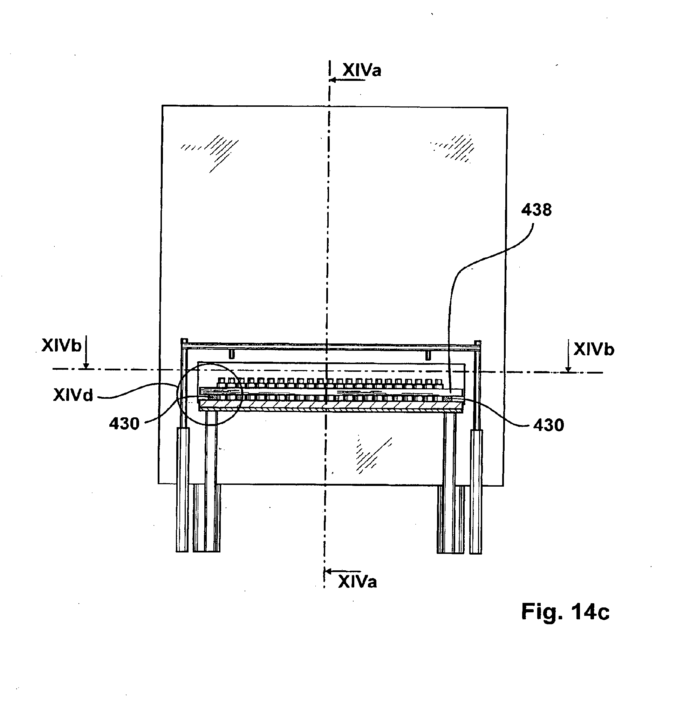

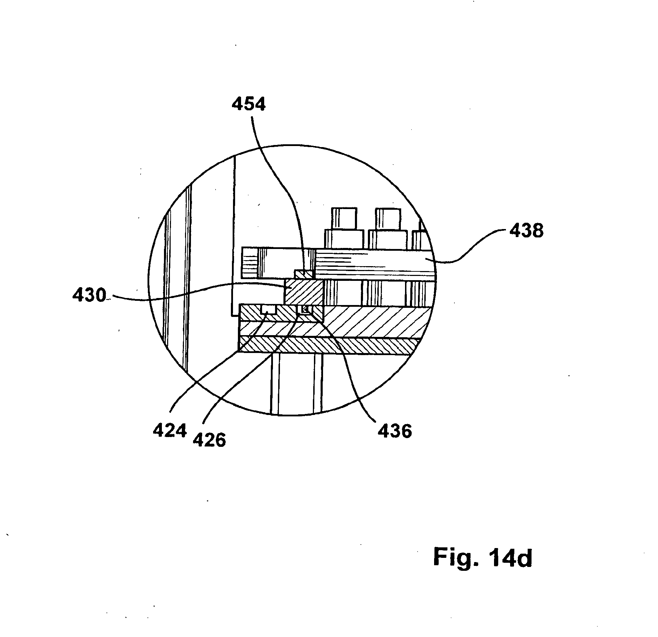

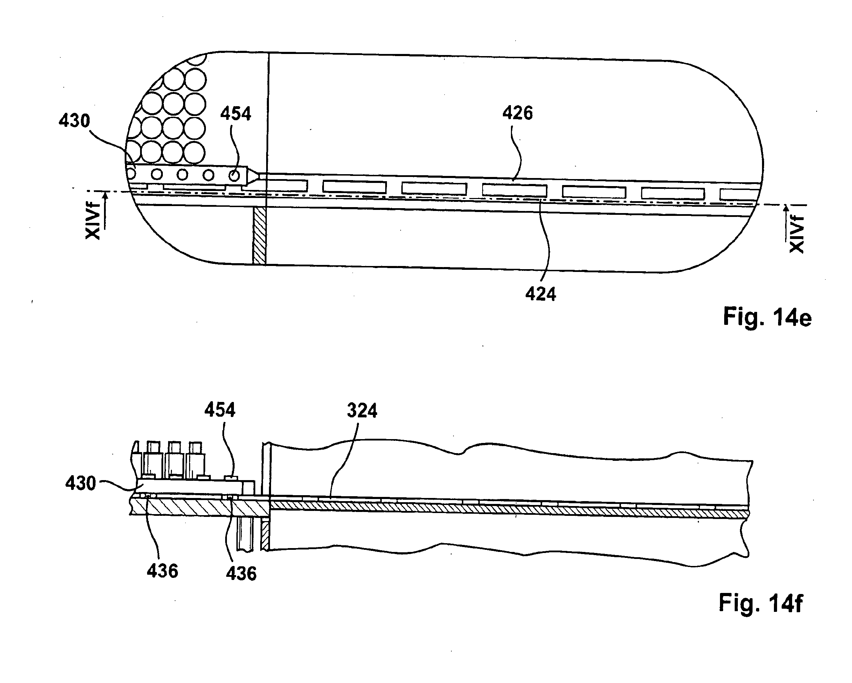

In den Fig. 14a bis 14f ist eine vierte Ausführungsform einer erfindungsgemäßen Vorrichtung schematisch dargestellt. Diese vierte Ausführungsform unterscheidet sich von der in den Fig. 1a bis 1f dargestellten ersten Ausführungsform lediglich dadurch, dass statt der Schubkette eine Stange 430 eingesetzt ist. Wie auch bei der Schubkette, wird diese Stange 430 über Führungsstifte 436 in der Innen- 426 oder Außennut 424 geführt und besitzt an seiner Oberseite Zapfen 454 zur Aufnahme des Be- 438 und Entladeschiebers 450. Im Übrigen ist diese vierte Ausführungsform mit der in den Fig. 1a bis 1f dargestellten und oben beschriebenen ersten Ausführungsform identisch.

### Bezugszeichenliste:

- 10: Gefriertrocknungsanlage
- 12: Kammer
- 14: Öffnung
- 16, 216, 316,: Stellplatte
- 18, 218, 318,: Vial
- 20, 220, 320: Übergabetisch
- 22, 322: Führungselement
- 22', 322': Führungselement
- 24 424: Aussennut
- 26 426: Innennut
- 28: Verbindungsnut
- 30, 230, 330: Schubkette
- 430: Stange
- 32: Walze
- 34: Umlenkrolle
- 36 436: Führungsstift
- 38 438: Beladeschieber
- 238: Puscher
- 40: Ablage
- 42: Langloch
- 44: Zentriervorrichtung
- 45: Stützstisch
- 46: Spitze
- 48: Haltemimik
- 50 450: Entladeschieber
- 52: Langloch
- 54 454: Zapfen
- 56: Zuführeinrichtung
- 58: Zange

## Patentansprüche

1. Vorrichtung zum Be- und Entladen einer Stellplatte (16, 216, 316) einer Gefriertrocknungsanlage (10) mit einer Anzahl von Vials (18, 218, 318), mit einem vor der Gefriertrocknungsanlage (10) vorgesehenen Übergabetisch (20, 220, 320) zur zeitweiligen Aufnahme der Vials (18, 218, 318) und mit einer Schiebevorrichtung zum Verschieben der Vials (18, 218, 318) von dem Übergabetisch (20, 220, 320) auf die Stellplatte (16, 216, 316) oder von der Stellplatte (16, 216, 316) auf den Übergabetisch (20, 220, 320), wobei die Schiebevorrichtung weiterhin ein Beladeelement (38, 438) und einen Entladeschieber (50, 450) umfasst, und wobei das Beladeelement (38, 438) außerhalb der Gefriertrocknungsanlage (10) angeordnet ist, während der Entladeschieber (50, 450) innerhalb der Gefriertrocknungsanlage (10) angeordnet ist,
**dadurch gekennzeichnet,**
**dass** die Schiebevorrichtung einen rechten und einen linken Transportschlitten (30, 230, 330, 430) umfasst, und dass der rechte und der linke Transportschlitten (30, 230, 330, 430) quer zu seiner Bewegungsrichtung verschiebbar ist.

2. Vorrichtung nach Anspruch 1,
**dadurch gekennzeichnet,**
**dass** der Entladeschieber (50, 450) an einer der Öffnung (14) der Gefriertrocknungsanlage (10) gegenüberliegenden Seite der Kammer (12) gehalten ist.

3. Vorrichtung nach wenigstens einem der vorangehenden Ansprüche,
**dadurch gekennzeichnet,**
**dass** das Beladeelement als Pusher (238) ausgeführt ist.

4. Vorrichtung nach wenigstens einem der vorangehenden Ansprüche,
**dadurch gekennzeichnet,**
**dass** das Beladeelement als Beladeschieber (38, 438) ausgeführt ist.

5. Vorrichtung nach wenigstens einem der vorangehenden Ansprüche,
**dadurch gekennzeichnet,**
**dass** der Transportschlitten als Schubkette (30, 230, 330) ausgebildet ist.

6. Vorrichtung nach wenigstens einem der vorangehenden Ansprüche,
**dadurch gekennzeichnet,**
**dass** der Transportschlitten als Stange (430) ausgebildet ist.

## Claims

1. An apparatus for loading and unloading a tray (16, 216, 316) of a freeze drying plant (10) with a number of vials (18, 218, 318), with a transfer table (20,220, 320) provided upstream of the freeze drying plant (10) for receiving temporarily said vials (18, 218, 318), and with a pusher apparatus for displacing said vials (18, 218, 318) from said transfer table (20, 220, 320) to said tray (16,216, 316) or from said tray (16, 216, 316) to said transfer table (20, 220, 320), said pusher apparatus further including a loading element (38, 438) and an unloading pusher (50, 450), said loading element (38, 438) being disposed outside of the freeze drying plant (10) whilst the unloading pusher (50, 450) is arranged inside the freeze drying plant (10),
**characterized in that**
said pusher apparatus includes a right-hand and left-hand transport carriage (30, 230, 330, 430) and that the right-hand and left-hand transport carriage (30, 230, 330, 430) is displaceable transversely to its direction of movement.

2. The apparatus according to claim 1,
**characterized in that**
the unloading pusher (50, 450) is retained at a side of the chamber (12) that is opposite the opening (14) of the freeze drying plant (10).

3. The apparatus according to one of the afore-mentioned claims,
**characterized in that**
the loading element is configured to be a pusher (238)

4. The apparatus according to one of the afore-mentioned claims,
**characterized in that**
the loading element is configured to be a loading pusher (38, 438).

5. The apparatus according to one of the afore-mentioned claims,
**characterized in that**
the transport carriage is configured to be a pusher chain (30, 230, 330).

6. The apparatus according to one of the afore-mentioned claims,
**characterized in that**
the transport carriage is configured to be a rod.

## Revendications

1. Dispositif pour le chargement et le déchargement d'un plateau (16, 216, 316) d'une installation de lyophilisation (10) avec un certain nombre de flacons (18, 218, 318), avec une table de transfert (20, 220, 320) prévue en amont de l'installation de lyophilisation (10) pour recevoir temporairement les flacons (18, 218, 318) et avec un dispositif poussoir pour déplacer (18, 218, 318) de la table de transfert (20, 220, 320) sur le plateau (16, 216, 316) ou du plateau (16, 216, 316) sur la table de transfert (20, 220, 320), où le dispositif poussoir comporte en outre un élément de chargement (38, 438) et un poussoir de déchargement (50, 450) et où l'élément de chargement (38, 438) est disposé à l'extérieur de l'installation de lyophilisation (10) tandis que le poussoir de déchargement (50, 450) est disposé à l'intérieur de l'installation de lyophilisation,
**caractérisé en ce que**
le dispositif poussoir comporte un chariot de transport droit et un chariot de transport gauche (30, 230, 330, 430) et que le chariot de transport droit et le chariot de transport gauche (30, 230, 330, 430) est déplaçable transversalement par rapport à sa direction de mouvement.

2. Dispositif selon la revendication 1,
**caractérisé en ce que**
le poussoir de déchargement (50, 450) est maintenu sur un côté de la chambre (12) faisant face à l'ouverture de l'installation de lyophilisation (10).

3. Dispositif selon l'une quelconque des revendications précédentes,
**caractérisé en ce que**
l'élément de chargement est configuré comme un poussoir (238).

4. Dispositif selon l'une quelconque des revendications précédentes,
**caractérisé en ce que**
l'élément de chargement est configuré comme un poussoir de chargement (38, 438).

5. Dispositif selon l'une quelconque des revendications précédentes,
**caractérisé en ce que**
le chariot de transport est configuré comme une chaîne de poussée (30, 230, 330).

6. Dispositif selon l'une quelconque des revendications précédentes,
**caractérisé en ce que**
le chariot de transport est configuré comme une tige (430).
